# FASCICULE DE BREVET EUROPEEN

(11) **EP 3 440 123 B1**
(45) Date de publication et mention de la délivrance du brevet: **20.12.2023**
(21) Numéro de dépôt: 17720857.6
(22) Date de dépôt: 07.04.2017
(51) Int. Cl.: C08G 69/26, C08G 69/34, C08G 69/36, C08L 77/02, C08L 77/06, B32B 1/08, E21B 43/01

(54) **COMPOSITION À BASE DE POLYAMIDE POUR DES TUYAUX CONTENANT DU PÉTROLE OU DU GAZ**
ZUSAMMENSETZUNG AUF POLYAMIDBASIS FÜR ÖL- ODER GASHALTIGE ROHRE
POLYAMIDE-BASED COMPOSITION FOR PIPES CONTAINING OIL OR GAS

(30) Priorité: 08.04.2016 FR 1653122
(43) Date de publication de la demande: 13.02.2019
(73) Titulaire: Arkema France, 92700 Colombes (FR)
(72) Inventeur: BRIFFAUD, Thierry, 27300 BERNAY (FR); BLONDEL, Philippe, 27300 BERNAY (FR); DANG, Patrick, 27300 SAINT- LEGER- DE - ROTES (FR); FERNAGUT, François, 27120 Le Val David (FR); FLAT, Jean-Jacques, 27170 GOUPILLIERES (FR); SAILLARD, Benjamin, 27300 BERNAY (FR)
(74) Mandataire: Arkema Patent
(86) Numéro de dépôt international: PCT/FR2017/050840
(87) Numéro de publication internationale: WO 2017/174949

(56) Documents cités:
- WO-A1-2010/015785
- WO-A1-2011/073308
- WO-A2-2008/122743
- JP-A- 2006 192 743
- George Wypych: "Handbook of Plasticizers" In: "Handbook of Plasticizers", 1 décembre 2003 (2003-12-01), ChemTec Publishing, XP055394360, pages 299-299, alinéa [11.18.2]

## Description

La présente invention concerne l'utilisation d'une composition comprenant au moins un copolyamide semi-cristallin comprenant au moins un motif minoritaire issu en particulier de la polycondensation d'au moins une diamine avec un dimère d'acide gras, comme couche d'étanchéité dans un tuyau, en particulier flexible, contenant du pétrole ou du gaz, ce tuyau étant utilisé dans l'exploitation des gisements de pétrole ou de gaz sous la mer (offshore).

L'invention concerne aussi les structures ou tuyaux obtenus à partir desdites compositions.

L'exploitation de gisements pétroliers situés en mer soumet à des conditions extrêmes les matériaux mis en oeuvre, et en particulier les tuyaux reliant les différents dispositifs sous-marins de la plate-forme et véhiculant les hydrocarbures extraits, qui sont généralement transportés à haute température et haute pression (par exemple, 700 bars).

Lors du fonctionnement des installations, il se pose donc des problèmes aigus de résistance mécanique, thermique et chimique des matériaux mis en oeuvre. De tels tuyaux doivent en particulier résister au pétrole chaud, au gaz, à l'eau et aux mélanges d'au moins deux de ces produits pendant des durées pouvant atteindre 20 ans.

De manière classique, ces tuyaux comprennent une couche intérieure métallique non étanche formée par une bande en métal profilée enroulée en hélice telle qu'un feuillard agrafé. Cette couche intérieure métallique, qui donne la forme au tuyau, est revêtue, en général par extrusion, d'une couche de polymère destinée à conférer l'étanchéité. D'autres couches de protection et/ou de renfort telles que des nappes de fibres métalliques, des thermoplastiques et des caoutchoucs peuvent également être disposées autour de la couche de polymère étanche.

La gaine d'étanchéité en polymère recouvrant la carcasse a généralement un cahier des charges particulièrement difficile à remplir puisqu'elle assure l'étanchéité des tubes flexibles alors qu'elle est en contact direct avec les produits transportés en pression et température. Cette gaine doit principalement:
* pouvoir être extrudée en continu, éventuellement sur le support de la carcasse interne,
* être suffisamment souple pour accepter les courbures imposées au flexible pendant les opérations de fabrication, de pose et l'utilisation du flexible sur le site (mouvement de la houle ou relevage du flexible pour un changement de site d'utilisation),
* résister au fluage consécutif aux efforts de pression, aggravés par le niveau de température. Le fluage se produit dans les déjoints (espace ou jeu) entre les armures métalliques (par exemple zêta auto agrafé ou T) sur lesquelles la gaine s'appuie lorsque la conduite est pressurisée par l'effluent transporté,
* être suffisamment stable chimiquement pour que ses caractéristiques mécaniques et son étanchéité ne se dégradent pas de manière rédhibitoire pendant la durée de vie du flexible.

Pour des températures de service en dessous de 40°C, le polymère est du HDPE (polyéthylène haute densité) réticulé ou non. Pour des températures supérieures à 40°C, on utilise du polyamide et, pour des températures supérieures à 90°C, on met en oeuvre du PVDF (polyfluorure de vinylidène).

Compte tenu du coût élevé du PVDF, et malgré l'implication de températures plus élevées que celles préconisées, le choix du polymère s'est porté sur les polyamides, tels que le PA11 et le PA12, bien connus pour leur bonne tenue thermique, leur résistance chimique, notamment aux solvants, leur résistance aux intempéries et aux rayonnements, leur imperméabilité aux gaz et aux liquides et leur qualité d'isolants électriques.

Ces polyamides sont déjà couramment utilisés pour la fabrication de tuyaux destinés à véhiculer des hydrocarbures extraits de gisements pétroliers situés sous la mer (offshore) ou non (on-shore) mais présentent toutefois l'inconvénient de vieillir trop vite.

Le brevet FR 1 395 076 décrit des compositions à base d'acides gras dimérisés présentant une faible absorption d'eau. Les compositions exemplifiées contiennent une fraction molaire très importante en acide gras dimérisés. Ni la résistance à l'hydrolyse, ni l'application off-shore, ne sont mentionnées.

Les demandes internationales WO 2006/047775 et WO 2007/044573 décrivent toutes deux des compositions copolyamides résistantes à l'hydrolyse contenant des comonomères minoritaires contenant un cycle aromatique ou alicyclique. Cependant, ces compositions ne permettent pas d'améliorer significativement la tenue à l'hydrolyse du PA11.

La demande internationale WO2008104719 décrit des compositions A/(diamine en Cz).(diacide en Cw) dans laquelle Cw peut être un dimère d'acide gras. Ces produits sont utilisés en tant qu'adhésifs et ni la résistance à l'hydrolyse, ni l'application OffShore, ne sont mentionnées.

Le brevet FR3010408 décrit des copolyamides à base de dimères d'acides gras. Ce brevet revendique une utilisation pour des articles de sport mais l'application OffShore n'est pas mentionnée.

Les compositions actuelles en polyamide ne permettent en général qu'une température de service des tuyaux de 60°C à 70°C dépendant du pH ou de l'indice d'acidité totale (TAN) du fluide transporté et du critère d'acceptance utilisé.

Il y a donc nécessité de trouver un compromis entre ces différents paramètres et d'augmenter parailleurs la température de service destuyauxainsi que d'augmenter la tenue thermique tout en conservant une bonne extrudabilité de la composition et les propriétés de flexibilité du tuyau.

Un premier objet de l'invention est donc l'utilisation d'une composition comprenant au moins un copolyamide semi-cristallin comprenant au moins un motif minoritaire issu en particulier de la polycondensation d'au moins une diamine avec un dimère d'acide gras, comme couche d'étanchéité dans un tuyau contenant du pétrole ou du gaz, ce tuyau étant utilisé dans l'exploitation des gisements de pétrole ou de gaz sous la mer (offshore).

Un second objet concerne les structures ou tuyaux obtenus à partir desdites compositions.

### UTILISATION

La présente invention concerne l'utilisation d'une composition comprenant au moins un polyamide, dont l'un au moins dudit polyamide est un copolyamide semi-cristallin comprenant au moins un motif minoritaire issu de la polycondensation :
- d'au moins une diamine avec au moins un acide gras polymérisé, en particulier un dimère d'acide gras, ou
- d'au moins un dimère diamine avec au moins un acide dicarboxylique, ou
- d'au moins un dimère aminoacide,

en particulier issu de la polycondensation :
   - d'au moins une diamine avec au moins un acide gras polymérisé, en particulier un dimère d'acide gras, ou
   - d'au moins un dimère diamine avec au moins un acide dicarboxylique,
ou leur mélanges,
la proportion molaire dudit motif minoritaire étant supérieure à 1%,
ledit motif minoritaire comprenant au moins l'une des formules suivantes :
   - soit les restes d'un dimère d'acide gras de formule (I) suivante: 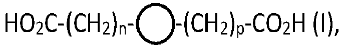
   - soit les restes d'un dimère diamine de formule (II) suivante : 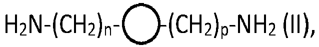
   - soit les restes d'un dimère amino acide de formule (III) suivante : 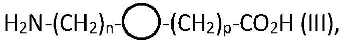
ou un mélange de celles-ci,
dans lesquelles formules, indépendamment l'une de l'autre :
   n est compris de 1 à 10, en particulier 1 à 7,
   p est compris de 1 à 10, en particulier 1 à 7,
   ○ correspondant à une structure choisie parmi : 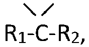 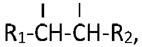 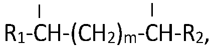 m étant compris de 1 à 5
      dans lesquelles R₁ et R₂ représentent, indépendamment l'un de l'autre, H ou une chaîne alkyle en C₁ à C₁₂, en particulier en C₇ à C₁₁,
         et 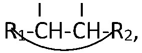
      dans laquelle R₁ et R₂ sont cyclisés pour former une structure :
         i) à un cycle de type cyclohexane : 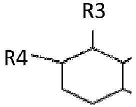 ou phényle : 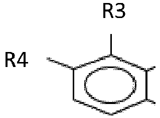
         ii) à deux cycles de type 1,2,3,4-tétrahydronaphtalène 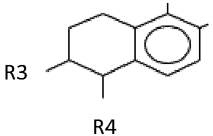 ou de type bicyclo[4.4.0]décane : 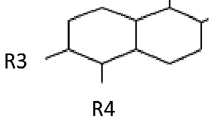
      R₃ et R₄ étant dans les structures à un ou deux cycles des résidus alkyles en C1 à C10, en particulier C7 à C9,
   ou un mélange de celles-ci,
   le nombre total d'atomes de carbone dans le diacide de formule (I), la diamine de formule (II) et l'aminoacide de formule (III) étant supérieur ou égale à 30, en particulier supérieur ou égal à 36, en particulier 36,
   ladite composition comprenant en poids :
      - au moins 70% en poids d'un copolyamide semi-cristallin tel que défini ci-dessus, comprenant optionnellement de 0 à 70% en poids d'un autre polyamide,
      - de 2 à 10 % en poids, d'une polyoléfine comprenant une fonction époxy, anhydride ou acide, introduite par greffage ou par copolymérisation,
      - de 3 à 20 % en poids, avantageusement de 5 à 13 % en poids, d'un plastifiant, et
      - de 0 à 10%, en poids, d'un additif, en particulier de 1 à 10%,
   comme couche d'étanchéité dans un tuyau contenant du pétrole ou du gaz, ce tuyau étant utilisé dans l'exploitation des gisements de pétrole ou de gaz sous la mer (offshore).
Avantageusement, n est compris de 5 à 7.
Avantageusement, p est compris de 5 à 7.
Avantageusement, n et p sont compris de 5 à 7.

Les Inventeurs ont trouvé de façon tout à fait inattendue que l'utilisation d'un copolyamide semi-cristallin comprenant au moins un motif minoritaire à base d'un acide gras polymérisé ou d'un dimère diamine ou d'un dimère aminoacide permettait d'obtenir des compositions qui présentent de bonnes propriétés d'extrusion, une meilleure tenue thermique ainsi qu'une température de service des tuyaux améliorée et donc une meilleure résistance à l'hydrolyse.

Dans toute la description, sauf indication contraire, tous les pourcentages indiqués sont des pourcentages en poids.

L'expression "composition comprenant au moins un polyamide, dont l'un au moins est un copolyamide semi-cristallin comprenant au moins un motif minoritaire ... » signifie que la composition peut comprendre :
- un seul polyamide, et dans ce cas, ledit polyamide ne peut être que le copolyamide semi-cristallin comprenant au moins un motif minoritaire,
- deux polyamides, et dans ce cas, l'un des polyamides est le copolyamide semi-cristallin comprenant au moins un motif minoritaire et l'autre peut être n'importe quel autre polyamide, à savoir un polyamide semi-cristallin ou amorphe, homopolyamide ou copolyamide, ou bien les deux polyamides sont des copolyamides semi-cristallin différents l'un de l'autre et comprenant au moins un motif minoritaire,
- trois polyamides, et dans ce cas, l'un des polyamides est le copolyamide semi-cristallin comprenant au moins un motif minoritaire et les deux autres peuvent être n'importe quel autre polyamide, à savoir un polyamide semi-cristallin ou amorphe, homopolyamide ou copolyamide, ou bien, deux des polyamides correspondent chacun à un copolyamide semi-cristallin différent l'un de l'autre et comprenant chacun au moins un motif minoritaire, et le troisième polyamide correspond à n'importe quel autre polyamide, à savoir un polyamide semi-cristallin ou amorphe, homopolyamide ou copolyamide,
- plus de trois polyamides, et dans ce cas, le ou les polyamides additionnels, par rapport à la précédente possibilité à trois polyamides, est(sont) choisi(s) parmi un copolyamide semi-cristallin, différent du ou des autres copolyamide semi-cristallin et comprenant au moins un motif minoritaire, et un autre polyamide, à savoir un polyamide semi-cristallin ou amorphe, homopolyamide ou copolyamide différent du ou des autres.

### Copolvamide semi-cristallin

L'expression "copolyamide semi-cristallin" couvre les copolyamides qui présentent à la fois une température de transition vitreuse Tg et une température de fusion Tf. La Tg et la Tf peuvent être déterminées respectivement selon la norme ISO 11357-2 :2013 et 11357-3 :2013.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Un copolyamide semi-cristallin, au sens de l'invention, désigne un copolyamide qui présente une température de fusion (Tf) en DSC selon la norme ISO 11357-3 de 2013, et une enthalpie de cristallisation lors de l'étape de refroidissement à une vitesse de 20K/min en DSC mesurée selon la norme ISO 11357-3 de 2013 supérieure à 30 J/g, de préférence supérieure à 40 J/g.

Le copolyamide semi-cristallin comprend un motif minoritaire qui peut être issu de la polycondensation d'au moins une diamine avec au moins un acide gras polymérisé, en particulier un dimère d'acide gras.

Par conséquent ledit copolyamide est de structure A/X-acide gras polymérisé dans laquelle A est un motif qui résulte de la condensation :
- d'un lactame en C6 à C12,
- d'un acide alpha,omega-aminocarboxylique aliphatique en C6 à C12,
- d'une diamine en Ca et d'un diacide en Cb.

Lorsque le polyamide est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule H2N-(CH2)a-NH2, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22).

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques, les diacides aromatiques.

Dans toute la description, les expressions « diacide » ou « diacide carboxylique » ou « acide dicarboxylique » désignent le même produit.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22).

Lorsque le diacide est cycloaliphatique, il peut comporter les squelettes carbonés suivants : norbornyle, cyclohexyle, dicyclohexyle, dicyclohexylpropane.

Lorsque le diacide est aromatique, il est choisi parmi l'acide téréphtalique (noté T), isophtalique (noté I) et les diacides naphtaléniques.
X est une diamine telle que définie ci-dessus pour la diamine en Cb.

Les acides gras polymérisés désignent les composés produits à partir de réactions de couplage d'acides gras insaturés qui conduisent à des mélanges de produits portant deux fonctions acides (dénommés dimères acide) ou trois fonctions acides (dénommés trimères acides).

Les acides gras polymérisés sont commercialisés et notamment le produit de dénomination commerciale Pripol^{®} commercialisé par la société Croda peut être utilisé ainsi que le produit de dénomination commerciale Empol^{®} commercialisé par la société Cognis ou le produit de dénomination commerciale Unydime^{®} commercialisé par la société Arizona Chemical ou encore le produit de dénomination commerciale Radiacid^{®} commercialisé par la société Oleon.

Après séparation, les dimères d'acide gras sont obtenus majoritairement de 75% à plus de 98%, en mélange avec notamment le monomère, le 1 ½ mère et le trimère correspondant.

Les dimères d'acide gras peuvent ensuite être transformés en dimères amine (par transformation des deux fonctions acides en fonction amine) ou en dimères aminoacide (par transformation d'une des fonctions acide en fonction amine.

Le copolyamide semi-cristallin comprend un motif minoritaire qui peut aussi être issu de la polycondensation d'au moins un dimère diamine avec au moins un acide dicarboxylique.

Par conséquent ledit copolyamide est de structure A/dimère diamine-Y dans laquelle A est tel que défini ci-dessus. Le dimère diamine provient d'un dimère d'acide gras dans lequel les fonctions acides ont été transformées en fonctions amines.

Y représente un acide dicarboxylique tel que défini pour le diacide en Cb.

Le copolyamide semi-cristallin comprend un motif minoritaire qui peut être issu de la polycondensation d'au moins un dimère aminoacide.

Par conséquent ledit copolyamide est de structure A/dimère aminoacide dans laquelle A est tel que défini ci-dessus. Le dimère aminoacide provient d'un dimère d'acide gras dans lequel l'une des fonctions acides a été transformée en fonction amine.

La composition de l'invention est utilisée comme couche d'étanchéité pour la fabrication de tuyaux contenant du pétrole ou du gaz utilisés dans l'exploitation des gisements de pétrole ou de gaz sous la mer (offshore).

Ces tuyaux servent d'une part pour assurer les connexions entre le fond sous-marin où se situe la tête de puits et la surface ou se trouve la plateforme pétrolière qui assure le traitement et l'expédition de la production mais aussi, pour véhiculer l'effluent produit par des puits, sous forme de produits liquides ou gazeux, entre un site de stockage ou de traitement et le lieu d'utilisation.

Ces tuyaux flexibles transportent donc la production pétrolière et tous les produits qui peuvent y être associés (pétrole brute liquide et/ou gaz, sous pression et en température, ainsi que d'autre fluides divers tels que l'eau, le méthanol... provenant du puits).

Par conséquent, le terme gaz désigne un gaz combustible issu du puits de pétrole et ne concerne en aucune manière de l'air ou un mélange avec de l'air.

Le tuyau de l'invention n'est ni un tuyau pneumatique transportant de l'air ni un tuyau hydraulique transportant de l'huile notamment minérale.

Le tuyau de l'invention est utilisé dans l'exploitation des gisements de pétrole ou de gaz sous la mer (offshore) et ne concerne donc pas non plus les tuyaux on-shore.

Avantageusement, lorsque la composition comprend deux ou plus polyamides, ledit copolyamide semi-cristallin (ou la totalité des copolyamides) comprenant au moins un motif minoritaire est majoritaire en poids par rapport à l'autre polyamide.

Dans un autre mode de réalisation, la présente invention concerne l'utilisation d'une composition telle que définie ci-dessus, dans laquelle :
ledit motif minoritaire comprend au moins l'une des formules suivantes :
   - soit les restes d'un dimère d'acide gras de formule (I) suivante: 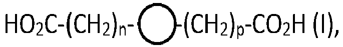
   - soit les restes d'un dimère diamine de formule (II) suivante : 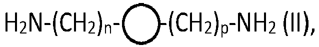
   - soit les restes d'un dimère amino acide de formule (III) suivante : 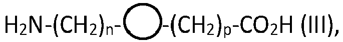
ou un mélange de celles-ci,
dans lesquelles formules, indépendamment l'une de l'autre :
   n est compris de 1 à 10, en particulier 1 à 7,
   p est compris de 1 à 10, en particulier 1 à 7,
   ○ correspond à une structure choisie parmi : 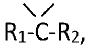 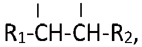 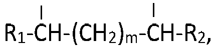 m étant compris de 1 à 5, dans lesquelles R₁ et R₂ représentent, indépendamment l'un de l'autre, H ou une chaîne alkyle en C₁ à C₁₂, en particulier en C₇ à C₁₁,
      et 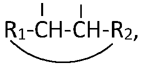
   dans laquelle R₁ et R₂ sont cyclisés pour former une structure :
      i) à un cycle de type cyclohexane : 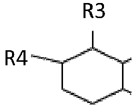 ou phényle : 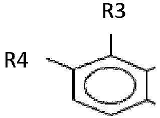
      ii) à deux cycles de type 1,2,3,4-tétrahydronaphtalène 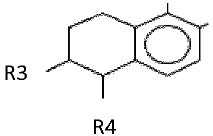 ou de type bicyclo[4.4.0]décane : 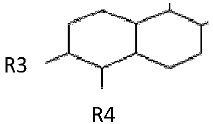
   R₃ et R₄ étant dans les structures à un ou deux cycles des résidus alkyles en C1 à C10, en particulier C7 à C9,
ou un mélange de celles-ci,
le nombre total d'atomes de carbone dans le diacide de formule (I), la diamine de formule (II) et l'aminoacide de formule (III) étant supérieur ou égale à 30, en particulier supérieur ou égal à 36, en particulier 36.

Dans un mode de réalisation avantageux, la présente invention concerne l'utilisation d'une composition telle que définie ci-dessus, dans laquelle :
ledit polyamide est constitué d'un copolyamide semi-cristallin, et
ledit motif minoritaire comprend au moins l'une des formules suivantes :
   - soit les restes d'un dimère d'acide gras de formule (I) suivante: 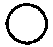 HO₂C-(CH₂)ₙ- -(CH₂)ₚ-CO₂H (I),
   - soit les restes d'un dimère diamine de formule (II) suivante : 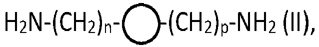
   - soit les restes d'un dimère amino acide de formule (III) suivante : 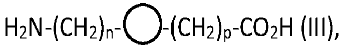
ou un mélange de celles-ci,
dans lesquelles formules, indépendamment l'une de l'autre :
   n est compris de 1 à 10, en particulier 1 à 7,
   p est compris de 1 à 10, en particulier 1 à 7,
   ○ correspond à une structure choisie parmi : 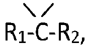 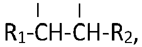 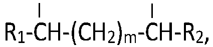 m étant compris de 1 à 5, dans lesquelles R₁ et R₂ représentent, indépendamment l'un de l'autre, H ou une chaîne alkyle en C₁ à C₁₂, en particulier en C₇ à C₁₁,
      et 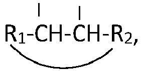
      dans laquelle R₁ et R₂ sont cyclisés pour former une structure :
         i) à un cycle de type cyclohexane : 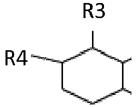 ou phényle : 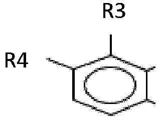
         ii) à deux cycles de type 1,2,3,4-tétrahydronaphtalène : 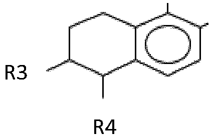 ou de type bicyclo[4.4.0]décane : 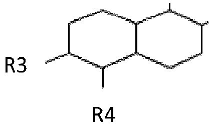
      R₃ et R₄ étant dans les structures à un ou deux cycles des résidus alkyles en C1 à C10, en particulier C7 à C9,
   ou un mélange de celles-ci,
   le nombre total d'atomes de carbone dans le diacide de formule (I), la diamine de formule (II) et l'aminoacide de formule (III) étant supérieur ou égale à 30, en particulier supérieur ou égal à 36, en particulier 36.

Dans un mode de réalisation avantageux, la présente invention concerne l'utilisation d'une composition telle que définie ci-dessus, dans laquelle :
ledit polyamide est constitué d'un copolyamide semi-cristallin, et
ledit motif minoritaire comprend les restes d'un dimère d'acide gras de formule (I) suivante: 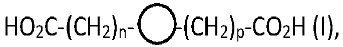 dans laquelle formule (I):
   n est compris de 1 à 10, en particulier 1 à 7,
   p est compris de 1 à 10, en particulier 1 à 7,
   ○ correspond à une structure choisie parmi : 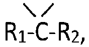 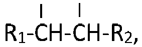 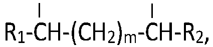 m étant compris de 1 à 5, dans lesquelles R₁ et R₂ représentent, indépendamment l'un de l'autre, H ou une chaîne alkyle en C₁ à C₁₂, en particulier en C₇ à C₁₁,
      et 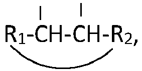
      dans laquelle R₁ et R₂ sont cyclisés pour former une structure :
         i) à un cycle de type cyclohexane : 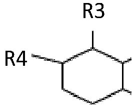 ou phényle : 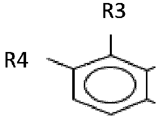
         ii) à deux cycles de type 1,2,3,4-tétrahydronaphtalène 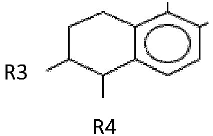 ou de type bicyclo[4.4.0]décane : 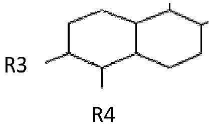
      R₃ et R₄ étant dans les structures à un ou deux cycles des résidus alkyles en C1 à C10, en particulier C7 à C9,
   ou un mélange de celles-ci,
le nombre total d'atomes de carbone dans le diacide de formule (I) étant supérieur ou égale à 30, en particulier supérieur ou égal à 36, en particulier 36.

Dans un mode de réalisation avantageux, la présente invention concerne l'utilisation d'une composition telle que définie ci-dessus, dans laquelle le tuyau est un tuyau flexible.

Dans un mode de réalisation avantageux, la présente invention concerne l'utilisation d'une composition telle que définie ci-dessus, dans laquelle le copolyamide est un copolyamide aliphatique.

Les inventeurs ont trouvé de manière inattendue que la présence de chaînes latérales aliphatique longues greffées sur la chaîne principale permettait de retarder le moment ou la dégradation hydrolytique rend le PA fragile et cassant.

Il faut noter l'importance du greffage des chaînes latérales sur la chaîne principale. En effet, le greffage d'une chaîne latérale sur l'azote des monomères aminoacides, lactame et diamine conduit à une composition présentant une grande sensibilité à l'hydrolyse.

Dans un mode de réalisation avantageux, la présente invention concerne l'utilisation d'une composition telle que définie ci-dessus, dans laquelle la viscosité en solution de la composition, telle que déterminée selon la norme ISO 307:2007 dans le m-crésol à une température de 20°C, est supérieure à 1, en particulier supérieure à 1,2.

Avantageusement, le polyamide de ladite composition dont la viscosité est supérieure à 1, en particulier supérieure à 1,2, a une teneur équilibrée en fins de chaînes NH2 et COOH (l'écart entre ces deux fonctions sera préférentiellement inférieur à 20 µeq/g en excès de NH2 ou de COOH tel que déterminé par potentiométrie.

Dans un mode de réalisation avantageux, la présente invention concerne l'utilisation d'une composition telle que définie ci-dessus, dans laquelle la Tf de la composition est supérieure à 170°C, telle que déterminée selon la norme ISO 11357-3 :2013 à une vitesse de 20K/min en DSC.

Dans un mode de réalisation avantageux, la présente invention concerne l'utilisation d'une composition telle que définie ci-dessus, dans laquelle au moins l'un des autres motifs dudit copolyamide est un motif A choisi parmi un motif obtenu à partir d'un aminoacide en C₆ à C₁₂, un motif obtenu à partir d'un lactame en C₆ à C₁₂, et un motif répondant à la formule (diamine aliphatique en Ca).(diacide aliphatique en Cb), avec a représentant le nombre d'atomes de carbone de la diamine et b représentant le nombre d'atome de carbone du diacide, a et b étant chacun compris entre 4 et 36, notamment entre 4 et 22.

Avantageusement, la proportion molaire dudit au moins motif minoritaire dans le copolyamide semi-cristallin est de 1 à 20%, en particulier de 1 à 10%, notamment de 2 à 10% par rapport à la somme de tous les motifs dudit copolyamide.

Un taux de motif minoritaire supérieur à 20% s'accompagne d'un abaissement du point de fusion et de la cristallinité qui peuvent s'avérer néfastes à l'application visée.

Un taux de motif minoritaire inférieur à 1% ne permet pas d'obtenir une amélioration de la tenue à l'hydrolyse.

Dans un mode de réalisation avantageux, la présente invention concerne l'utilisation d'une composition telle que définie ci-dessus, dans laquelle :
ledit polyamide est constitué d'un copolyamide semi-cristallin, et
ledit motif minoritaire, en proportion molaire dans le copolyamide semi-cristallin comprise de 1 à 20%, en particulier de 1 à 10%, notamment de 2 à 10% par rapport à la somme de tous les motifs dudit copolyamide, comprend au moins l'une des formules suivantes :
   - soit les restes d'un dimère d'acide gras de formule (I) suivante: 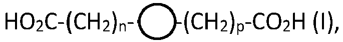
   - soit les restes d'un dimère diamine de formule (II) suivante : 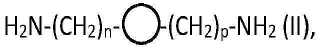
   - soit les restes d'un dimère amino acide de formule (III) suivante : 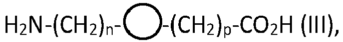
ou un mélange de celles-ci,
dans lesquelles formules, indépendamment l'une de l'autre :
   n est compris de 1 à 10, en particulier 1 à 7,
   p est compris de 1 à 10, en particulier 1 à 7,
   ○ correspond à une structure choisie parmi : 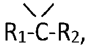 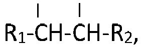 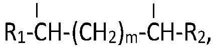 m étant compris de 1 à 5,
      dans lesquelles R₁ et R₂ représentent, indépendamment l'un de l'autre, H ou une chaîne alkyle en C₁ à C₁₂, en particulier en C₇ à C₁₁,
      et 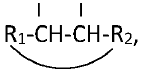
      dans laquelle R₁ et R₂ sont cyclisés pour former une structure :
         i) à un cycle de type cyclohexane : 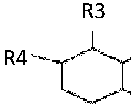 ou phényle : 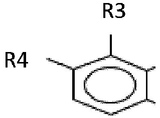
         ii) à deux cycles de type 1,2,3,4-tétrahydronaphtalène 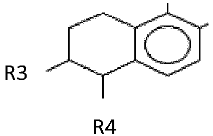 ou de type bicyclo[4.4.0]décane : 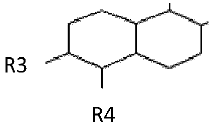
      R₃ et R₄ étant dans les structures à un ou deux cycles des résidus alkyles en C1 à C10, en particulier C7 à C9,
   ou un mélange de celles-ci,
   le nombre total d'atomes de carbone dans le diacide de formule (I), la diamine de formule (II) et l'aminoacide de formule (III) étant supérieur ou égale à 30, en particulier supérieur ou égal à 36, en particulier 36,
   et au moins l'un des autres motifs dudit copolyamide est un motif A choisi parmi un motif obtenu à partir d'un aminoacide en C₆ à C₁₂, un motif obtenu à partir d'un lactame en C₆ à C₁₂, et un motif répondant à la formule (diamine aliphatique en Ca).(diacide aliphatique en Cb), avec a représentant le nombre d'atomes de carbone de la diamine et b représentant le nombre d'atome de carbone du diacide, a et b étant chacun compris entre 4 et 36, notamment entre 4 et 22.

Dans un mode de réalisation avantageux, la présente invention concerne l'utilisation d'une composition telle que définie ci-dessus, dans laquelle :
ledit polyamide est constitué d'un copolyamide semi-cristallin, et
ledit motif minoritaire, en proportion molaire dans le copolyamide semi-cristallin comprise de 1 à 20%, en particulier de 1 à 10%, notamment de 2 à 10% par rapport à la somme de tous les motifs dudit copolyamide, comprend les restes d'un dimère d'acide gras de formule (I) suivante: 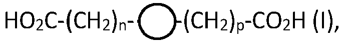 dans laquelle formule :
   n est compris de 1 à 10, en particulier 1 à 7,
   p est compris de 1 à 10, en particulier 1 à 7,
   ○ correspond à une structure choisie parmi : 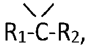 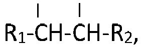 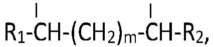 m étant compris de 1 à 5,
      dans lesquelles R₁ et R₂ représentent, indépendamment l'un de l'autre, H ou une chaîne alkyle en C₁ à C₁₂, en particulier en C₇ à C₁₁,
      et 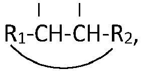
      dans laquelle R₁ et R₂ sont cyclisés pour former une structure :
         i) à un cycle de type cyclohexane : 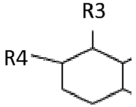 ou phényle : 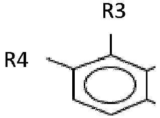
         ii) à deux cycles de type 1,2,3,4-tétrahydronaphtalène 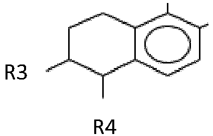 ou de type bicyclo[4.4.0]décane : 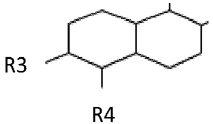
      R₃ et R₄ étant dans les structures à un ou deux cycles des résidus alkyles en C1 à C10, en particulier C7 à C9,
   ou un mélange de celles-ci,

le nombre total d'atomes de carbone dans le diacide de formule (I), la diamine de formule (II) et l'aminoacide de formule (III) étant supérieur ou égale à 30, en particulier supérieur ou égal à 36, en particulier 36,
et au moins l'un des autres motifs dudit copolyamide est un motif A choisi parmi un motif obtenu à partir d'un aminoacide en C₆ à C₁₂, un motif obtenu à partir d'un lactame en C₆ à C₁₂, et un motif répondant à la formule (diamine aliphatique en Ca).(diacide aliphatique en Cb), avec a représentant le nombre d'atomes de carbone de la diamine et b représentant le nombre d'atome de carbone du diacide, a et b étant chacun compris entre 4 et 36, notamment entre 4 et 22.

Dans un mode de réalisation avantageux, la présente invention concerne l'utilisation d'une composition telle que définie ci-dessus, dans laquelle ledit motif minoritaire est un motif X.diacide de formule (I), X étant une diamine aliphatique.

Dans un mode de réalisation avantageux, la présente invention concerne l'utilisation d'une composition telle que définie ci-dessus, dans laquelle ○ correspond à

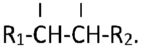

Dans un mode de réalisation avantageux, la présente invention concerne l'utilisation d'une composition telle que définie ci-dessus, dans laquelle l'acide gras polymérisé comprend un dimère d'acide gras en proportion d'au moins 75% en poids, notamment d'au moins 92% en poids, en particulier d'au moins 95% en poids.

Dans un mode de réalisation avantageux, la présente invention concerne l'utilisation d'une composition telle que définie ci-dessus, dans laquelle :
ledit polyamide est constitué d'un copolyamide semi-cristallin, et
ledit motif minoritaire, en proportion molaire dans le copolyamide semi-cristallin comprise de 1 à 20%, en particulier de 1 à 10%, notamment de 2 à 10% par rapport à la somme de tous les motifs dudit copolyamide, comprend les restes d'un dimère d'acide gras, en proportion d'au moins 75% en poids, notamment d'au moins 92% en poids, en particulier d'au moins 95% en poids, de formule (I) suivante: 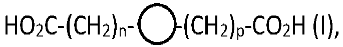 dans laquelle formule :
   n est compris de 1 à 10, en particulier 1 à 7,
   p est compris de 1 à 10, en particulier 1 à 7,
   ○ correspond à une structure choisie parmi : 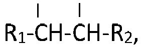 dans laquelle R₁ et R₂ représentent, indépendamment l'un de l'autre, H ou une chaîne alkyle en C₁ à C₁₂, en particulier en C₇ à C₁₁,

le nombre total d'atomes de carbone dans le diacide de formule (I), la diamine de formule (II) et l'aminoacide de formule (III) étant supérieur ou égale à 30, en particulier supérieur ou égal à 36, en particulier 36,
et au moins l'un des autres motifs dudit copolyamide est un motif A choisi parmi un motif obtenu à partir d'un aminoacide en C₆ à C₁₂, un motif obtenu à partir d'un lactame en C₆ à C₁₂, et un motif répondant à la formule (diamine aliphatique en Ca).(diacide aliphatique en Cb), avec a représentant le nombre d'atomes de carbone de la diamine et b représentant le nombre d'atome de carbone du diacide, a et b étant chacun compris entre 4 et 36, notamment entre 4 et 22.

Avantageusement, la présente invention concerne l'utilisation d'une composition telle que définie ci-dessus, dans laquelle le nombre de carbones de la diamine X est supérieur à 8, en particulier est égal à 10.

Avantageusement, le motif A est motif obtenu à partir de la polycondensation d'un lactame ou d'un aminoacide, en particulier choisi parmi le PA 11 et le PA12.

Avantageusement, la présente invention concerne l'utilisation d'une composition telle que définie ci-dessus, dans laquelle le nombre de carbones de la diamine X est supérieur à 8, en particulier est égal à 10 et le motif A est motif obtenu à partir de la polycondensation d'un lactame ou d'un aminoacide, en particulier choisi parmi le PA 11 et le PA12.

Avantageusement, la présente invention concerne l'utilisation d'une composition telle que définie ci-dessus, dans laquelle le motif A est un motif obtenu à partir de la polycondensation d'une diamine aliphatique en Ca et d'un acide dicarboxylique aliphatique en Cb, en particulier le motif Ca + Cb > 15, notamment > 19.

Dans les unités A= CaCb et/ou X.diacide de formule (I), indépendamment l'une de l'autre, jusqu'à 30% en mole, par rapport à la quantité totale des diacides carboxyliques, le diacide Cb et/ou diacide de formule (I) peut être remplacé par d'autres diacides carboxyliques aromatiques, aliphatiques ou cycloaliphatiques comprenant 6 à 36 atomes de carbone, en particulier 6 à 14 atomes de carbone, et,
dans les unités A= CaCb et/ou X.diacide de formule (I), indépendamment l'une de l'autre, jusqu'à 30% en mole de Ca et/ou selon le cas de X, par rapport à la quantité totale des diamines, peut être remplacée par d'autres diamines comprenant de 4 à 36 atomes de carbone, en particulier 6 à 12 atomes de carbone, et
dans le copolyamide, pas plus de 30% en mole, par rapport à la quantité totale des monomères, peut être formée par des lactames ou des acides aminocarboxyliques, et
à condition que la somme des monomères qui remplacent le diacide de formule (I) le diacide Cb, la diamine Ca et X ne dépasse pas une concentration de 30% en mole par rapport à la quantité totale des monomères utilisés dans le copolyamide et
à condition qu'aucune des unités Ca, Cb, X et diacide de formule (I) ne soit pas totalement substituée.

Avantageusement, la présente invention concerne l'utilisation d'une composition telle que définie ci-dessus, dans laquelle le nombre de carbones de la diamine X est supérieur à 8, en particulier est égal à 10 et le motif A est un motif obtenu à partir de la polycondensation d'une diamine aliphatique en Ca et d'un acide dicarboxylique aliphatique en Cb, en particulier le motif Ca + Cb > 15, notamment > 19.

Avantageusement, le motif A est choisi parmi PA614, PA618, PA1010, PA1012, PA1014, PA1018, PA1210, PA1212, PA1214, PA1218.

Dans un mode de réalisation avantageux, la présente invention concerne l'utilisation d'une composition telle que définie ci-dessus, dans laquelle ladite composition comprend un polyamide choisi parmi un polyamide aliphatique, cycloaliphatique et aromatique, et ledit au moins un polyamide semi-cristallin.

Avantageusement, le dit polyamide aliphatique ou cycloaliphatique ou aromatique est en proportion en poids de 0,1 à 90%, notamment de 0,1 à 80%, en particulier de 0,1% à 50%.

Avantageusement, ledit polyamide est un polyamide aliphatique ou cycloaliphatique identique au motif A dudit polyamide semi-cristallin.

Avantageusement, la composition comprend deux polyamides dont l'un est le copolyamide semi-cristallin comprenant au moins un motif minoritaire.

Avantageusement, la composition comprend deux polyamides dont l'un est un homopolyamide aliphatique et l'autre est le copolyamide semi-cristallin comprenant au moins un motif minoritaire, en particulier le dit homopolyamide aliphatique étant en proportion en poids de 0,1 à 90%, notamment de 0,1 à 80%.

Dans un mode de réalisation avantageux, la présente invention concerne l'utilisation d'une composition telle que définie ci-dessus, dans laquelle la composition comprend de plus au moins une polyoléfine, en particulier fonctionnalisée.

La polyoléfine peut être fonctionnalisée ou non fonctionnalisée, avantageusement fonctionnalisée, ou être un mélange d'au moins une fonctionnalisée et/ou d'au moins une non fonctionnalisée, en particulier un mélange d'au moins une fonctionnalisée et d'au moins une non fonctionnalisée.

On entend par polyoléfine, un polymère comprenant des motifs oléfines tels que, par exemple, des motifs éthylène, propylène, butène, octène ou tout autre alpha oléfine.

A titre d'exemple, on peut citer :
- les polyéthylènes tels que les LDPE, HDPE, LLDPE ou VLDPE, le polypropylène ou encore les polyéthylènes métallocènes ;
- les copolymères de l'éthylène tels que les copolymères éthylène/propylène, les terpolymères éthylène/propylène/diène ; et
- les copolymères de l'éthylène avec au moins un produit choisi parmi les sels ou esters d'acides carboxyliques insaturés et les esters vinyliques d'acides carboxyliques saturés ;
- les copolymères d'acrylonitrile et de butadiène tels que le NBR.

Dans une version particulièrement avantageuse de l'invention, la polyoléfine est un copolymère élastomère de l'éthylène.

Un tel copolymère élastomère d'éthylène est un composé obtenu à partir d'au moins deux monomères distincts dont au moins un monomère d'éthylène.

De préférence, ce copolymère élastomère d'éthylène est choisi parmi un copolymère éthylène/propylène (EPR), un copolymère éthylène/butylène, un copolymère «éthylène/octène et un copolymère éthylène/(méth)acrylate d'alkyle.

Le copolymère éthylène/propylène (EPR) est un copolymère élastomère bien connu, obtenu à partir de monomères d'éthylène et de propylène. L'EPR ou EPM, est notamment décrit dans l'ouvrage Ullmann's Encyclopedia of Industrial Chemistry, 5e édition, Vol A 23, des pages 282 à 288, le contenu étant incorporé dans la présente demande.

Le copolymère éthylène/butylène est obtenu à partir de monomères d'éthylène et de butène-1.

Le copolymère éthylène/(méth)acrylate d'alkyle est obtenu par polymérisation radicalaire de l'éthylène et de (méth)acrylate d'alkyle. Le méth(acrylate) d'alkyle est de préférence choisi parmi le (méth)acrylate de méthyle, l'acrylate d'éthyle, l'acrylate de n-butyle, l'acrylate d'isobutyle, l'acrylate d'octyle et l'acrylate de 2-éthylhexyle.

La polyoléfine utilisée dans le cadre de la présente invention peut être fonctionnalisée dans le sens où elle comprend au moins une fonction époxy, anhydride ou acide, cette fonction étant introduite par greffage ou par copolymérisation.

La polyoléfine fonctionnalisée peut notamment être choisie parmi les copolymères éthylène/alpha oléfines, fonctionnalisés et les copolymères éthylène/(méth)acrylate d'alkyle fonctionnalisés.

La polyoléfine fonctionnalisée peut également être choisie parmi :
- les copolymères de l'éthylène, d'un époxyde insaturé et éventuellement d'un ester ou un sel d'acide carboxylique insaturé ou d'un ester vinylique d'acide carboxylique saturé. Ce sont, par exemple, les copolymères éthylène/acétate de vinyle/(méth)acrylate de glycidyle ou les copolymères éthylène/(méth)acrylate d'alkyle/(méth)acrylate de glycidyle,
- les copolymères de l'éthylène, d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont, par exemple, les copolymères éthylène/acétate de vinyle/anhydride maléique, les copolymères éthylène/(méth)acrylate d'alkyle/anhydride maléique ou encore les copolymères éthylène/(méth)acrylate de Zn ou Li/anhydride maléique.

La densité de la polyoléfine fonctionnalisée peut avantageusement être comprise entre 0,86 et 0,965.

De manière avantageuse, la polyoléfine est fonctionnalisée par un anhydride d'acide carboxylique.

Plus préférentiellement, la polyoléfine fonctionnelle est choisie parmi un copolymère éthylène/propylène (EPR) greffé anhydride maléique, un copolymère éthylène/butylène greffé anhydride maléique, un copolymère éthylène/octène greffé anhydride maléique et un copolymère éthylène/(méth)acrylate d'alkyle comprenant une fonction anhydride maléique.

A titre d'exemple de copolymère éthylène/(méth)acrylate d'alkyle comprenant une fonction anhydride maléique, on peut citer les terpolymères de l'éthylène, d'acrylate d'alkyle et d'anhydride maléique, notamment commercialisés par la Demanderesse sous la dénomination commerciale Lotader^{®}.

La polyoléfine est présente de 0 à 25 % en poids, avantageusement de 0 à 15%, en particulier de 2 à 10 % en poids.

Dans un mode de réalisation avantageux, ladite composition est dépourvue de polyoléfine.

Dans un autre mode de réalisation avantageux, la dite polyoléfine est présente en proportion massique de 2 à 10% dans ladite composition.

Dans un mode de réalisation avantageux, la présente invention concerne l'utilisation d'une composition telle que définie ci-dessus, dans laquelle la composition comprend de plus au moins un plastifiant.

Le plastifiant est choisi parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tel que l'oligoéthylèneoxy malonate.

On ne sortirait pas du cadre de l'invention en utilisant un mélange de plastifiants.

Le plastifiant particulièrement préféré est le n-butyl benzène sulfonamide (BBSA).

Le plastifiant peut être introduit dans le polyamide pendant la polycondensation ou ultérieurement.

Le plastifiant utilisé dans la composition est en proportion massique de 0 à 20 %, en particulier de 3 à 20%, notamment de 5 à 13%.

Dans un mode de réalisation avantageux, ladite composition est dépourvue de plastifiant.

Dans un mode de réalisation avantageux, ladite composition est dépourvue de polyoléfine et de plastifiant.

Dans un autre mode de réalisation avantageux, ladite composition est dépourvue de plastifiant et la dite polyoléfine est présente en proportion massique de 2 à 10% dans ladite composition.

Dans un mode de réalisation avantageux, ledit plastifiant est en proportion massique de 3 à 20%, notamment de 5 à 13% dans ladite composition.

Dans un autre mode de réalisation avantageux, ledit plastifiant est en proportion massique de 3 à 20%, notamment de 5 à 13% et la dite polyoléfine est présente en proportion massique de 2 à 10% dans ladite composition.

Dans un mode de réalisation avantageux, la présente invention concerne l'utilisation d'une composition telle que définie ci-dessus, dans laquelle la composition comprend de plus au moins un additif.

L'additif est choisi parmi un catalyseur, un antioxydant, un stabilisant thermique, un stabilisant UV, un stabilisant à la lumière, un lubrifiant, une charge, un agent ignifugeant, un agent nucléant, un allongeur de chaîne et un colorant.

Le terme « catalyseur » désigne un catalyseur de polycondensation tel qu'un acide minéral ou organique.

Avantageusement, la proportion en poids de catalyseur est comprise d'environ 50 ppm à environ 5000 ppm, en particulier d'environ 100 à environ 3000 ppm par rapport au poids total de la composition.

Avantageusement, le catalyseur est choisi parmi l'acide phosphorique (H3PO4), l'acide phosphoreux (H3PO3), l'acide hypophosphoreux (H3PO2), ou un mélange de ceux-ci.

L'antioxydant peut notamment être un antioxydant à base de complexe de cuivre de 0,05 à 5% en poids, de préférence de 0,05 à 1% en poids de préférence de 0,1 à 1%.

L'expression complexe de cuivre désigne notamment un complexe entre un sel monovalent ou divalent de cuivre avec un acide organique ou inorganique et un ligand organique.

Avantageusement, le sel de cuivre est choisi parmi les sels cuivriques (Cu(II)) d'halogénure d'hydrogène, les sels cuivreux (Cu(I)) d'halogénure d'hydrogène et les sels d'acides carboxyliques aliphatiques.

En particulier, les sels de cuivre sont choisis parmi CuCI, CuBr, Cul, CuCN, CuCl2, Cu(OAc)2, le stéarate cuivrique.

Des complexes de cuivre sont notamment décrits dans US3505285.

Ledit complexe à base de cuivre peut de plus comprendre un ligand choisi parmi les phosphines, en particulier les triphenylphosphines, le mercaptobenzimidazole, l'EDTA, l'acétylacétonate, la glycine, l'éthylène diamine, l'oxalate, la diéthylène dimaine, la triéthylène tetraamine, la pyridine, la diphosphone et le dipyridyl ou leurs mélanges, en particulier la triphénylphosphine et/ou le mercaptobenzimidazole.

Les phosphines désignent les alkylphosphines, telle que la tributylphosphine ou les arylphosphines telle que la triphénylphosphine (TPP).

Avantageusement, ledit ligand est la triphénylphosphine.

Des exemples de complexes ainsi que leur préparation sont décrits dans le brevet CA 02347258.

Avantageusement, la quantité de cuivre dans la composition de l'invention est comprise de 10 ppm à 1000 ppm en poids, notamment de 20 ppm à 70 ppm, en particulier de 50 à 150 ppm par rapport au poids total de la composition.

Dans un mode de réalisation avantageux, la présente invention concerne l'utilisation d'une composition telle que définie ci-dessus, caractérisée en ce que ledit complexe à base de cuivre comprend de plus un composé organique halogéné.

Le composé organique halogéné peut être tout composé organique halogéné.

Avantageusement, ledit composé organique halogéné est un composé à base de brome et/ou un composé aromatique.

Avantageusement, ledit composé aromatique est notamment choisi parmi le decabromediphenyl, decabromodiphenyl ether, les oligomères de bromo ou chloro styrène, le polydibromostyrene, le tetrabromobisphenyl-A, les dérivés de tetrabisphenyl-A, tels que les dérivés epoxy, et les dérivés de chloro dimethanedibenzo(a,e)cyclooctène et leurs mélanges.

Avantageusement, ledit composé organique halogéné est un composé à base de brome.

Ledit composé organique halogéné est ajouté à la composition en une proportion de 50 à 30 000 ppm en poids d'halogène par rapport au poids total de la composition, notamment de 100 à 10000 en particulier de 500 à 1500 ppm.

Avantageusement, le ratio molaire cuivre:halogène est compris de 1 :1 à 1 :3000, notamment de 1 :2 à 1 :100.

En particulier, ledit ratio est compris de 1 :1,5 à 1:15.

Avantageusement, l'antioxydant à base de complexe de cuivre est choisi parmi un Bruggolen^{®} H3386, un Bruggolen^{®} H3376, un Bruggolen^{®} H3344, un Bruggolen^{®} H3350, en particulier un Bruggolen^{®} H3386.

Il est également possible d'utiliser des limiteurs de chaînes en tant qu'additifs.

Des exemples de régulateurs de chaîne appropriés sont des monoamines, des acides monocarboxyliques, des diamines, des triamines, des acides dicarboxyliques, des acides tricarboxyliques, des tétraamines, des acides tétracarboxyliques et, des oligoamines ou des acides oligocarboxyliques ayant respectivement dans chaque cas 5 à 8 groupes amino ou carboxy et en particulier des acides dicarboxyliques, des acides tricarboxyliques ou un mélange d'acides dicarboxyliques et d'acides tricarboxyliques. A titre d'exemple, il est possible d'utiliser l'acide dodécanedicarboxylique sous forme d'acide dicarboxylique et de l'acide trimellitique comme acide tricarboxylique.

Préférentiellement ledit limiteur de chaîne sera différent d'un limiteur de chaîne monofonctionnel.

De préférence, les additifs du polyamide de la composition de l'invention se présentent en une quantité de 0 à 10%, en particulier de 1 à 10 %, en poids par rapport au poids total de la composition.

Dans un mode de réalisation avantageux, la présente invention concerne l'utilisation d'une composition telle que définie ci-dessus, dans laquelle la composition comprend en poids :
- 70 à 96% dudit copolyamide semi-cristallin comprenant optionnellement de 0 à 70% en poids d'un autre polyamide,
- 0 à 25 % en poids, avantageusement de 0 à 15%, en particulier de 2 à 10 % en poids, d'une polyoléfine comprenant une fonction époxy, anhydride ou acide, introduite par greffage ou par copolymérisation, et
- 3 à 20 % en poids, avantageusement de 5 à 13 % en poids, d'un plastifiant,
- 0 à 10%, en poids, d'un additif, en particulier de 1 à 10%.

La composition utilisée dans le cadre de la présente invention est préparée par mélange, à l'état fondu, des différents constituants dans tout dispositif de mélange, et de préférence une extrudeuse.

La composition est le plus souvent récupérée sous forme de granulés.

Selon un autre aspect, la présente invention concerne un tuyau, en particulier flexible, destiné à être utilisé dans l'exploitation des gisements de pétrole ou de gaz sous la mer (offshore) comprenant au moins une couche d'étanchéité (1) obtenue à partir d'une composition telle que définie ci-dessus.

Dans un mode de réalisation avantageux, la présente invention concerne un tuyau, en particulier flexible tel que défini ci-dessus, caractérisé en ce qu'il comprend en outre au moins une deuxième couche (2), non étanche, constituée d'un ou plusieurs éléments métalliques, la deuxième couche (2) étant en contact avec le pétrole ou le gaz véhiculé, la couche (1) étant disposée autour de la deuxième couche (2) de manière à assurer l'étanchéité.

Dans un mode de réalisation avantageux, la présente invention concerne un tuyau, en particulier flexible tel que défini ci-dessus, caractérisé en ce qu'il comprend en outre au moins une troisième couche (3) en métal ou en matériau composite, la troisième couche (3) étant disposée autour de la couche (1) de manière à compenser la pression interne du pétrole ou du gaz véhiculé.

L'expression « matériau composite » signifie que ladite couche (3) est constituée d'au moins un polyamide, identique ou différent de celui de la couche (1) comprenant de plus des fibres continues choisies parmi :
- les fibres minérales, en particulier des fibres de verre,
- les fibres de carbone et les nanotubes de carbone
- les fibres polymériques ou de polymère,
- ou les mélanges des fibres précitées.

Avantageusement, lesdites fibres sont des fibres de verre ou des fibres de carbone, notamment des fibres de verre.

Avantageusement, la proportion de fibres continues est de 30 à 80% par rapport au poids total de la composition.

Tuyau flexible tel que défini ci-dessus, caractérisé en ce qu'il comprend en outre au moins une quatrième couche (4) de protection disposée autour de la couche (1) ou, le cas échéant, de la troisième couche (3).

La couche de protection peut être une nappe de fibres métalliques ou des caoutchoucs.

Toutes les caractéristiques définies ci-dessus dans le paragraphe « Utilisation » sont valables pour le tuyau comprenant la composition de l'invention.

Selon un autre aspect, la présente invention concerne une composition comprenant en poids :
- au moins 70 d'un copolyamide semi-cristallin tel que défini ci-dessus, comprenant optionnellement de 0 à 70% en poids d'un autre polyamide,
- de 2 à 10 % en poids, d'une polyoléfine comprenant une fonction époxy, anhydride ou acide, introduite par greffage ou par copolymérisation,
- de 3 à 20 % en poids, avantageusement de 5 à 13 % en poids, d'un plastifiant, et
- de 0 à 10%, en poids, d'un additif, en particulier de 1 à 10%.

Avantageusement, ledit autre polyamide est un polyamide aliphatique, en particulier PA11 ou PA12.

Avantageusement, ledit copolyamide de la composition ci-dessus définie comprend au moins un motif minoritaire issu de la polycondensation :
- d'au moins une diamine avec au moins un acide gras polymérisé, en particulier un dimère d'acide gras, ou
- d'au moins un dimère diamine avec au moins un acide dicarboxylique, ou
- d'au moins un dimère aminoacide,
en particulier issu de la polycondensation :
- d'au moins une diamine avec au moins un acide gras polymérisé, en particulier un dimère d'acide gras, ou
- d'au moins un dimère diamine avec au moins un acide dicarboxylique,
ou leur mélanges.

Avantageusement, ledit motif minoritaire dudit copolyamide de la composition ci-dessus définie est un motif X.diacide de formule (I), X étant une diamine aliphatique.

La présente invention va maintenant être illustrée par des exemples de différentes compositions dont l'utilisation fait l'objet de la présente invention ainsi que par différentes structures de tuyaux flexibles, également conformes à l'objet de la présente invention.

### DECRIPTION DES FIGURES

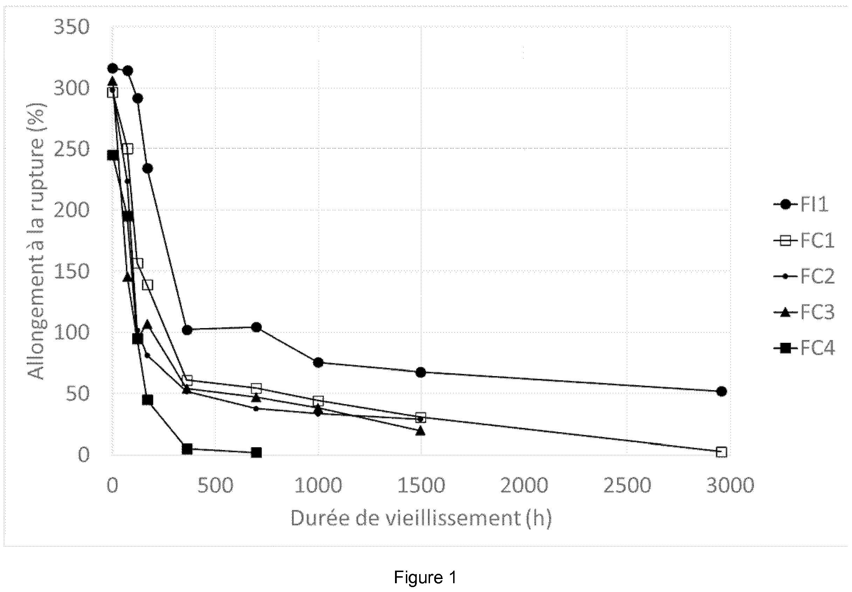

La figure 1 représente l'hydrolyse à 140°C pH4 de pièces extrudées obtenues à partir des différentes compositions formulées du tableau III et mesurée selon ASTM D638 type IV découpées dans des bandes 6mm.

L'allongement résiduel est environ 2 fois plus important à vieillissement égal. La durée de vie pour atteindre un allongement à la rupture de 50% (critère usuel) est nettement plus élevée.

La pièce extrudée obtenue avec la composition formulée de l'invention avec le Pripol 1009 présente donc une résistance à l'hydrolyse très nettement améliorée par rapport à une pièce obtenue avec une formulation à base de PA11 ou de PA11/10T.
Abscisse : durée du vieillissement en heures
Ordonnée : Allongement à la rupture (%)

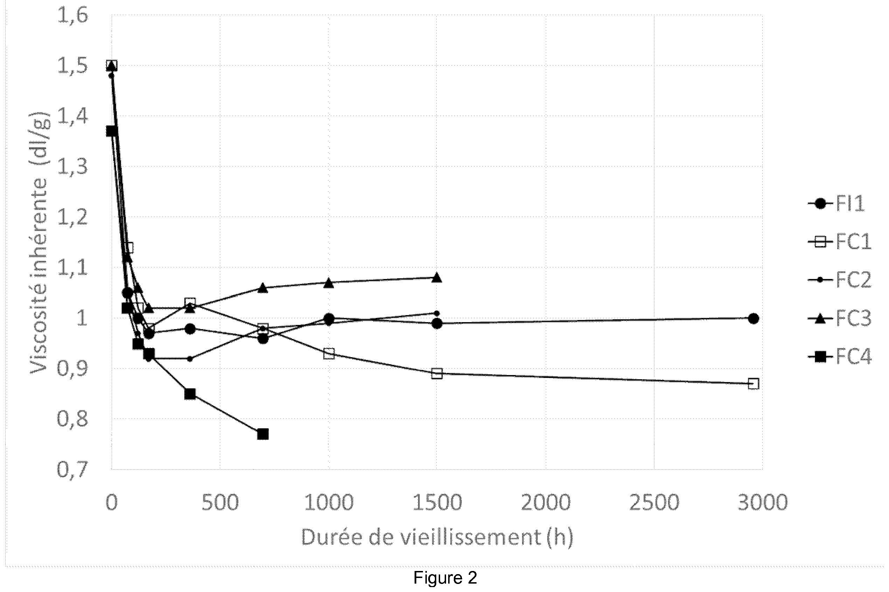

La figure 2 présente l'évolution de la viscosité inhérente en fonction de la durée de vieillissement mesurée lors du test d'hydrolyse effectué pour la figure 1.

La mesure de la viscosité inhérente est réalisée dans le m-crésol avec la méthode bien connue de l'homme du métier. On suit la norme ISO 307 :2007 mais en changeant le solvant (utilisation du m-crésol à la place de l'acide sulfurique, la température (20°C), et la concentration (0.5% massique).

La figure 2 montre que la chute de la viscosité n'est pas déterminante pour les propriétés mécaniques des différentes formulations puisque les viscosités de ces dernières atteignent toutes un plateau dont la valeur est somme toute ni mauvaise ni bonne (hormis pour la formulation FC4). Cependant ce critère n'est pas suffisamment révélateur de la résistance à l'hydrolyse puisque seule la composition de l'invention possède ces propriétés de résistance alors que les valeurs des viscosités au plateau sont sensiblement identiques, à l'exception de FC4.

En d'autres termes, il ne suffit pas d'introduire un monomère qui flexibilise pour obtenir de bonnes propriétés mécaniques d'une formulation.
Abscisse : durée du vieillissement en heures
Ordonnée : Viscosité inhérente (dl/g)

La figure 3 représente l'hydrolyse à 140°C pH4 de pièces extrudées obtenues à partir des différentes compositions formulées du tableau III et mesurée selon ASTM D638 type IV découpées dans des bandes 6mm.
Abscisse : durée du vieillissement en heures
Ordonnée : Allongement à la rupture (%)

La figure 4 présente la durée de vie (hydrolyse PH4, ASTM D638 type IV) de la composition de l'invention (Fl1) comparée à celle d'une composition de l'art antérieur (FC6)
Abscisse : 1/T en °K
Ordonnée : Nombre d'heures

Cette figure montre que l'amélioration de la température de durée de vie à 20 ans est de +20°C pour la composition de l'invention comparée à un PA11 de l'art antérieur.

### EXEMPLES

### 1. Préparation d'un polymère de la composition de l'invention

Les compositions suivantes ont été préparées

**TABLEAU I**

| **Pesées** | | | | | | |
|---|---|---|---|---|---|---|
| | **C1** | **C2** | **C3** | **I1** | **C4** | **unité** |
| **Polyamide et Composition molaire** | **PA11/10 T** | **PA11** | **11/BHMTA. 10 200/1** | **PA11/10.Pripol 1009** | **PA11/NHAU** | |
| | **19/1** | | | **19/1** | **6/1** | |
| Acide téréphtalique | 1,31 | - | - | - | - | kg |
| Acide Amino 11 undécanoïque | 30,32 | 33 | 32,66 | 27,62 | 26,4 | kg |
| Décanediamine | 1,37 | - | - | 1,26 | - | kg |
| Acide sébacique | - | - | 0,25 | - | - | kg |
| Pripol 1009 | - | - | - | 4,12 | - | kg |
| BisHMTA | - | - | 0,17 | - | - | kg |
| Acide N-heptyl Amino 11 undécanoïque | - | - | - | - | 6,6 | kg |
| Eau permutée | 4 | 4 | 4 | 4 | 4 | kg |
| H₃PO₄ 85 % | 23,3 | 23.3 | - | 23,3 | 23,3 | g |

| | | | | | | |
|---|---|---|---|---|---|---|
| BisHMTA : bis hexaméthylène triamine Le Pripol 1009 utilisé a un indice d'hydroxyle IOH = 196 mg KOH/g, ce qui donne une masse molaire équivalente égale à 572.6 g/mol. Le pripol 1009 est constitué de : ≥98,5% de dimère, ≤1% de trimère, ≤1% de 1 ½ mère et ≤0,1% de monomère. NHAU : Acide N-heptyl Amino 11 undécanoïque. | | | | | | |

Les conditions de synthèse ont été les suivantes :
Après chargement, le réacteur autoclave de 100 litres est désoxygéné par séquences de mise sous pression d'azote puis de détente. Le contenu du réacteur est chauffé jusqu'à 240°C sous pression autogène et sous agitation puis maintenu 1 h dans ces conditions. Le réacteur est ensuite détendu à une pression de 0.2 bar relatif en 2 heures puis maintenu 30 minutes dans ces conditions (*). Le polymère obtenu est ensuite déchargé du réacteur sous forme de joncs puis sous forme de granulés.
(*)Dans le cas de l'exemple C4 est ajoutée une étape de polymérisation sous une pression absolue de 250 mbars pendant 60 minutes.

De la même manière que I1, I2 (PA11/10.Pripol 1009 9/1), I3 (PA11/10.Pripol 1009 25/1), I4 (PA11/10.Pripol 1009 30/1) et I5 (PA11/10.Pripol 1013 19/1) ont été synthétisés.

Le Pripol 1013 utilisé a un indice d'hydroxyle IOH = 196 mg KOH/g.

Le pripol 1013 est constitué de : ≥96% de dimère, ≤2,5% de trimère, ≤1,5% de 1 ½ mère et ≤0,1% de monomère.

Les polymères ont les caractéristiques suivantes :

**TABLEAU II**

| | **C1** | **C2** | **C3** | | **I1** | | **C4** | |
|---|---|---|---|---|---|---|---|---|
| Composition | **PA11/10 T** | **PA11** | **11/BHMT A.10** | | **PA11/10.Pripol 1009** | | **PA11/NHAU** | |
| | **19/1** | | **200/1** | | **19/1** | | **6/1** | |
| Acidité (meq/g) | 0,056 | 0,057 | 0,069 | | 0,056 | | 0,066 | |
| Basicité (meq/g) | 0,054 | 0,053 | 0,05 | | 0,04 | | 0,059 | |
| **Viscosité inhérente m-crésol (dl/g)** | 1,54 | 1,53 | 1,55 | | 1,41 | | 1,41 | |
| Tf (°C) | 176 | 191 | 190 | | 174 | | 166 | |
| Tc (°C) | 124 | 152 | 151 | | 145 | | 136 | |
| Enthalpie de cristallisation (J/g) | 45 | 63 | 61 | | 48 | | 50 | |
| Tg (°C) | 45 | 44 | 46 | | 31 | | 11 | |
| | | | | | | | | |

| | **I2** | | | **I3** | | **I4** | | **I5** |
|---|---|---|---|---|---|---|---|---|
| Composition | **PA11/10.Pripol 1009** | | | **PA11/10.Pripol 1009** | | **PA11/10.Pripol 1009** | | **PA11/10.Pripol 1013** |
| | **9/1** | | | **25/1** | | **30/1** | | **19/1** |
| Acidité (meq/g) | 0,049 | | | 0,055 | | 0,059 | | 0,059 |
| Basicité (meq/g) | 0,051 | | | 0,051 | | 0,041 | | 0,038 |
| **Viscosité inhérente m-crésol (dl/g)** | 1,37 | | | 1,45 | | 1,41 | | 1,42 |
| Tf (°C) | 168 | | | 181 | | 181 | | 178 |
| Tc (°C) | 145 | | | 136 | | 150 | | 134 |
| Enthalpie de cristallisation (J/g) | 51 | | | 52 | | 58 | | 55 |
| Tg (°C) | 27 | | | 33 | | 34 | | 32 |

La mesure de la viscosité inhérente est réalisée dans le m-crésol selon la norme ISO 307:2007 mais en changeant le solvant (utilisation du m-crésol à la place de l'acide sulfurique et la température étant de 20°C).

L'enthalpie de cristallisation dudit polymère de matrice est mesurée en Calorimétrie Différentielle à Balayage (DSC) selon la norme ISO 11357-3 :2013. La vitesse de chauffage et de refroidissement est de 20°C/min.

La Tf et la Tc sont mesurées en Calorimétrie Différentielle à Balayage (DSC) selon la norme ISO 11357-3 :2013. La vitesse de chauffage et de refroidissement est de 20°C/min.

La Tg est mesurée en Calorimétrie Différentielle à Balayage (DSC) selon la norme ISO 11357-2:2013. La vitesse de chauffage et de refroidissement est de 20°C/min.

La Mn du polymère thermoplastique est déterminée à partir de la titration (dosage) des fonctions terminales selon une méthode potentiométrique (dosage direct des acides ou des bases)

### 2. Préparation des compositions formulées

Les formulations suivantes ont été préparées (Tableau III)

**TABLEAU III**

| référence | **FC1** | **Formulation Invention FI1** | **FC3** | **FC2** | **FC4** | **FC5** | **FC6** |
|---|---|---|---|---|---|---|---|
| C1 | 82.8 | | | | | | |
| I1 | | 82.8 | | | | | |
| C2 | | | | 82.8 | | 88,8 | 87 |
| C3 | | | 82.8 | | | | |
| C4 | | | | | 98,8 | | |
| Exxelor VA 1801 | 10 | 10 | 10 | 10 | | 10 | |
| ANOX^{®} NDB TL89 | 1.2 | 1.2 | 1.2 | 1.2 | 1,2 | 1,2 | |
| BBSA | 6 | 6 | 6 | 6 | | | 13 |

**TABLEAU III**

| référence | **Formulation Invention FI2** | **Formulation Invention FI3** | **Formulation Invention FI4** | **Formulation Invention FI5** |
|---|---|---|---|---|
| I2 | 82.8 | | | |
| I3 | | 82.8 | | |
| I4 | | | 82.8 | |
| I5 | | | | 82,8 |
| Exxelor VA 1801 | 10 | 10 | 10 | 10 |
| ANOX^{®} NDB TL89 | 1.2 | 1.2 | 1.2 | 1,2 |
| BBSA | 6 | 6 | 6 | 6 |

| | | | | |
|---|---|---|---|---|
| ANOX^{®} NDB TL89 : stabilisant organique type phénol phosphite commercialisé par la société Chemtura. BBSA : n-butyl benzène sulfonamide commercialisé par la société PROVIRON Exxelor VA 1801: polyoléfine (copolymère d'éthylène fonctionnalisé anhydride maléique) commercialisé par la société Exxon. | | | | |

Ces essais ont été réalisés sur Werner 40. Le débit de compoundage a été de 60kg/hr pour une vitesse de vis de 300RPM et un profil de température plat à 280°C, sous un vide de 100 mbars absolu.

### 3. Hydrolyse à 140°C de pièces extrudées obtenues à partir des compositions du tableau III.

### 3.1 Préparation des pièces extrudées

Transformation sur une ligne de calandrage YVROUD, alimenté par une extrudeuse GOTTFERT 30mm.
Profil de température 210 225°C filière 230°C
Température des 3 cylindres de calandre : 70-75-85°C
Vitesse de ligne adaptée sur chaque essai à 0.35m/min.

### 3.2 Protocole du test d'hydrolyse

Les éprouvettes, ASTM D638 type IV sont découpées à l'emporte-pièce dans les bandes extrudées de 6mm d'épaisseur et placées dans des autoclaves en aciers.

Remplissage d'eau Volvic, fermeture étanche et barbotage d'azote pendant au moins 3 heures et demi.

Mise sous pression CO2 à 24 bars pour obtenir pH4.

Installation des autoclaves dans une étuve à 140°C.

Prélèvement des éprouvettes selon le plan prévu.

A chaque prélèvement, il y a renouvellement de l'eau Volvic, inertage et mise sous pression.

5 éprouvettes sont prélevées et soumises à un essai de traction à une vitesse de 50mm/min. L'allongement est mesuré par un extensomètre. La moyenne de l'allongement à la rupture ainsi déterminé est reportée en fonction du temps de vieillissement.

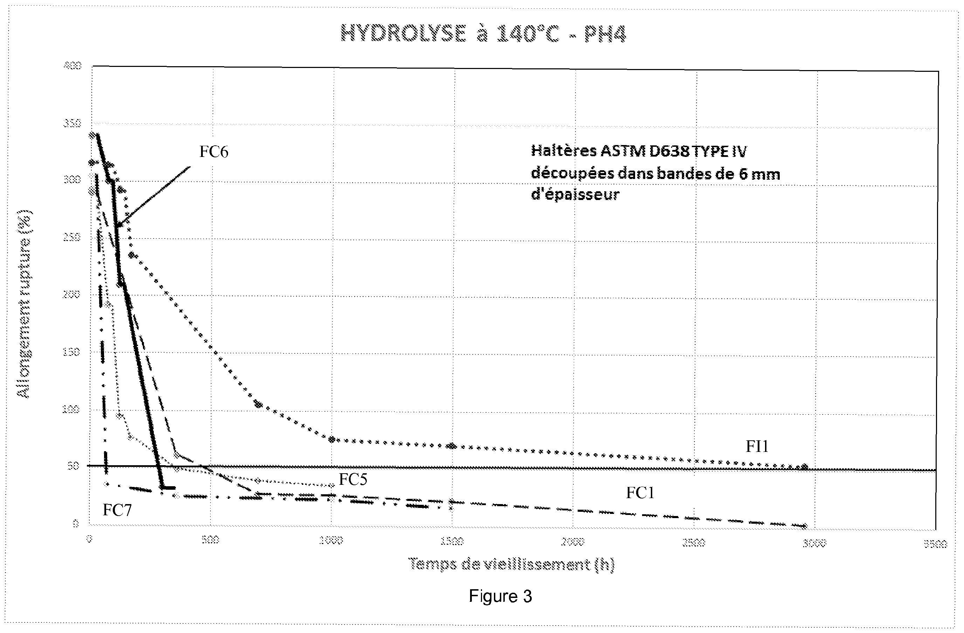

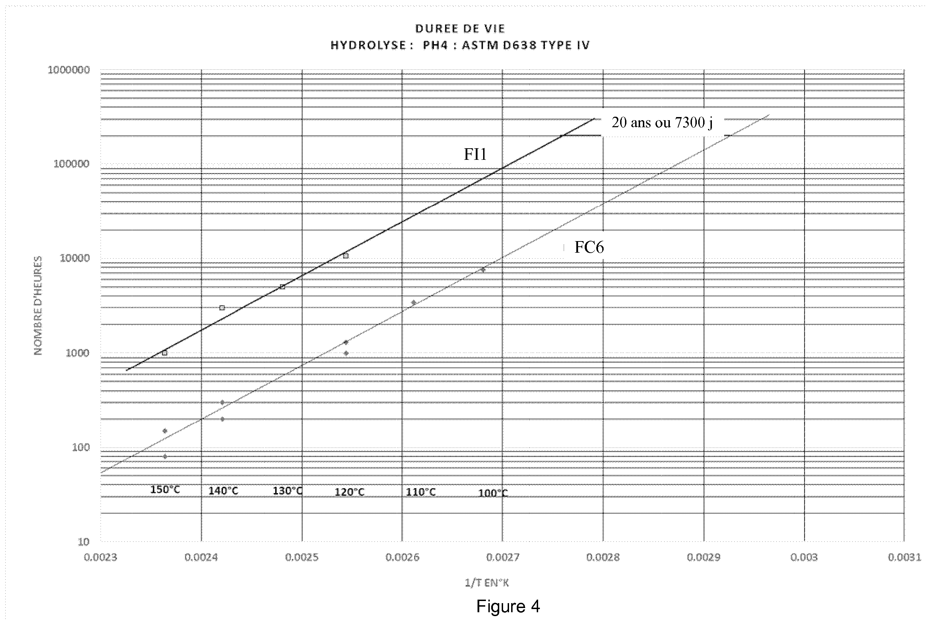

Les résultats sont présentés dans les figures 1, 3 et 4.

## Revendications

1. Utilisation d'une composition comprenant au moins un polyamide, dont l'un au moins dudit polyamide est un copolyamide semi-cristallin comprenant au moins un motif minoritaire issu de la polycondensation :
- d'au moins une diamine avec au moins un acide gras polymérisé, en particulier un dimère d'acide gras, ou
- d'au moins un dimère diamine avec au moins un acide dicarboxylique, ou
- d'au moins un dimère aminoacide,
en particulier issu de la polycondensation :
- d'au moins une diamine avec au moins un acide gras polymérisé, en particulier un dimère d'acide gras, ou
- d'au moins un dimère diamine avec au moins un acide dicarboxylique,
ou leur mélanges,
la proportion molaire dudit motif minoritaire étant supérieure à 1%,
ledit motif minoritaire comprenant au moins l'une des formules suivantes :
- soit les restes d'un dimère d'acide gras de formule (I) suivante: 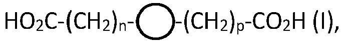
- soit les restes d'un dimère diamine de formule (II) suivante : 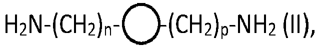
- soit les restes d'un dimère amino acide de formule (III) suivante : 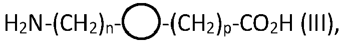
ou un mélange de celles-ci,
dans lesquelles formules, indépendamment l'une de l'autre :
n est compris de 1 à 10, en particulier 1 à 7,
p est compris de 1 à 10, en particulier 1 à 7,
○ correspondant à une structure choisie parmi : 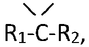 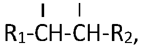 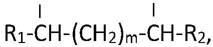 m étant compris de 1 à 5 dans lesquelles R₁ et R₂ représentent, indépendamment l'un de l'autre, H ou une chaîne alkyle en C₁ à C₁₂, en particulier en C₇ à C₁₁,
et 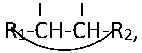
dans laquelle R₁ et R₂ sont cyclisés pour former une structure :
i) à un cycle de type cyclohexane : 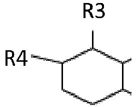 ou phényle : 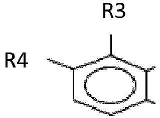
ii) à deux cycles de type 1,2,3,4-tétrahydronaphtalène 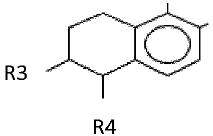 ou de type bicyclo[4.4.0]décane : 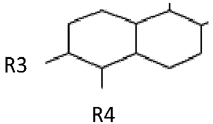
R₃ et R₄ étant dans les structures à un ou deux cycles des résidus alkyles en C1 à C10, en particulier C7 à C9,
ou un mélange de celles-ci,
le nombre total d'atomes de carbone dans le diacide de formule (I), la diamine de formule (II) et l'aminoacide de formule (III) étant supérieur ou égale à 30, en particulier supérieur ou égal à 36, en particulier 36,
ladite composition comprenant en poids :
- au moins 70% en poids d'un copolyamide semi-cristallin tel que défini ci-dessus, comprenant optionnellement de 0 à 70% en poids d'un autre polyamide,
- de 2 à 10 % en poids, d'une polyoléfine comprenant une fonction époxy, anhydride ou acide, introduite par greffage ou par copolymérisation,
- de 3 à 20 % en poids, avantageusement de 5 à 13 % en poids, d'un plastifiant, et
- de 0 à 10%, en poids, d'un additif, en particulier de 1 à 10%,
comme couche d'étanchéité dans un tuyau contenant du pétrole ou du gaz, ce tuyau étant utilisé dans l'exploitation des gisements de pétrole ou de gaz sous la mer (offshore).

2. Utilisation selon la revendication 1, dans laquelle le tuyau est un tuyau flexible.

3. Utilisation selon l'une des revendications 1 à 2, dans laquelle le copolyamide est un copolyamide aliphatique.

4. Utilisation selon l'une des revendications 1 à 3, dans laquelle la viscosité en solution de la composition, telle que déterminée selon la norme ISO 307:2007 dans le m-crésol à une température de 20°C, est supérieure à 1, en particulier supérieure à 1,2.

5. Utilisation selon l'une des revendications 1 à 4, dans laquelle la Tf de la composition est supérieure à 170°C, telle que déterminée selon la norme ISO 11357-3 :2013 à une vitesse de 20K/min en DSC.

6. Utilisation selon l'une des revendications 1 à 5, dans laquelle au moins l'un des autres motifs dudit copolyamide est un motif A choisi parmi un motif obtenu à partir d'un aminoacide en C₆ à C₁₂, un motif obtenu à partir d'un lactame en C₆ à C₁₂, et un motif répondant à la formule (diamine aliphatique en Ca).(diacide aliphatique en Cb), avec a représentant le nombre d'atomes de carbone de la diamine et b représentant le nombre d'atome de carbone du diacide, a et b étant chacun compris entre 4 et 22.

7. Utilisation selon l'une des revendications 1 à 6, dans laquelle la proportion molaire dudit au moins motif minoritaire dans le copolyamide semi-cristallin est de 1 à 20%, en particulier de 1 à 10%, notamment de 2 à 10% par rapport à la somme de tous les motifs dudit copolyamide.

8. Utilisation selon l'une des revendications 1 à 7, dans laquelle ledit motif minoritaire est un motif X.diacide de formule (I), X étant une diamine aliphatique.

9. Utilisation selon la revendication 8, dans laquelle ○ correspond à

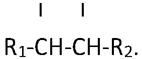

10. Utilisation selon la revendication 8 ou 9, dans laquelle l'acide gras polymérisé comprend un dimère d'acide gras en proportion d'au moins 75% en poids, notamment d'au moins 92% en poids, en particulier d'au moins 95% en poids.

11. Utilisation selon l'une des revendications 8 à 10, dans laquelle le nombre de carbones de la diamine X est supérieur à 8, en particulier est égal à 10.

12. Utilisation selon l'une des revendications 5 à 11, dans laquelle le motif A est un motif obtenu à partir de la polycondensation d'un lactame ou d'un aminoacide, en particulier choisi parmi le PA 11 et le PA12.

13. Utilisation selon l'une des revendications 5 à 12, dans laquelle le motif A est un motif obtenu à partir de la polycondensation d'une diamine aliphatique en Ca et d'un acide dicarboxylique aliphatique en Cb, en particulier le motif Ca + Cb > 15, notamment > 19.

14. Utilisation selon la revendication 13, dans laquelle le motif A est choisi parmi PA614, PA618, PA1010, PA1012, PA1014, PA1018, PA1210, PA1212, PA1214, PA1218.

15. Utilisation selon l'une des revendications 1 à 14, dans laquelle la composition comprend un polyamide choisi parmi un polyamide aliphatique, cycloaliphatique et aromatique, et ledit au moins un polyamide semi-cristallin.

16. Utilisation selon la revendication 15, dans laquelle ledit polyamide est un polyamide aliphatique ou cycloaliphatique identique au motif A dudit polyamide semi-cristallin.

17. Utilisation selon l'une des revendications 1 à 16, dans laquelle la composition comprend de plus au moins une polyoléfine, en particulier fonctionnalisée.

18. Utilisation selon l'une des revendications 1 à 17, dans laquelle la composition comprend de plus au moins un plastifiant.

19. Utilisation selon l'une des revendications 1 à 18, dans laquelle la composition comprend de plus au moins un additif.

20. Utilisation selon l'une des revendications 1 à 19, dans laquelle la composition comprend en poids :
- 70 à 96% dudit copolyamide semi-cristallin comprenant optionnellement de 0 à 70% en poids d'un autre polyamide,
- 0 à 25 % en poids, avantageusement de 0 à 15%, en particulier de 2 à 10 % en poids, d'une polyoléfine comprenant une fonction époxy, anhydride ou acide, introduite par greffage ou par copolymérisation, et
- 3 à 20 % en poids, avantageusement de 5 à 13 % en poids, d'un plastifiant,
- 0 à 10%, en poids, d'un additif, en particulier de 1 à 10%.

21. Tuyau, en particulier flexible, destiné à être utilisé dans l'exploitation des gisements de pétrole ou de gaz sous la mer (offshore) comprenant au moins une couche d'étanchéité (1) obtenue à partir d'une composition telle que définie selon l'une des revendications 1 à 20.

22. Tuyau selon la revendication 21, **caractérisé en ce qu'**il comprend en outre au moins une deuxième couche (2), non étanche, constituée d'un ou plusieurs éléments métalliques, la deuxième couche (2) étant en contact avec le pétrole ou le gaz véhiculé, la couche (1) étant disposée autour de la deuxième couche (2) de manière à assurer l'étanchéité.

23. Tuyau selon l'une quelconque des revendications 21 ou 22, **caractérisé en ce qu'**il comprend en outre au moins une troisième couche (3) en métal ou en matériau composite, la troisième couche (3) étant disposée autour de la couche (1) de manière à compenser la pression interne du pétrole ou du gaz véhiculé.

24. Tuyau flexible selon l'une quelconque des revendications 21 à 23, **caractérisé en ce qu'**il comprend en outre au moins une quatrième couche (4) de protection disposée autour de la couche (1) ou, le cas échéant, de la troisième couche (3).

25. Composition comprenant en poids :
- au moins 70% en poids d'un copolyamide semi-cristallin tel que défini dans la revendication 1, comprenant optionnellement de 0 à 70% en poids d'un autre polyamide,
- de 2 à 10 % en poids, d'une polyoléfine comprenant une fonction époxy, anhydride ou acide, introduite par greffage ou par copolymérisation,
- de 3 à 20 % en poids, avantageusement de 5 à 13 % en poids, d'un plastifiant, et
- de 0 à 10%, en poids, d'un additif, en particulier de 1 à 10%.

26. Composition selon la revendication 25, dans laquelle ledit autre polyamide est un polyamide aliphatique, en particulier PA11 ou PA12.

27. Composition selon la revendication 26, dans laquelle ledit copolyamide est tel que défini dans la revendication 1.

28. Composition selon l'une des revendications 25 à 27, dans laquelle ledit copolyamide est tel que défini dans la revendication 8.

## Patentansprüche

1. Verwendung einer Zusammensetzung, die mindestens ein Polyamid umfasst, wobei mindestens ein Polyamid davon ein halbkristallines Copolyamid ist, das mindestens eine Nebeneinheit aus der Polykondensation:
- mindestens eines Diamins mit mindestens einer polymerisierten Fettsäure, insbesondere einem Fettsäuredimer, oder
- mindestens eines Diamindimers mit mindestens einer Dicarbonsäure oder
- mindestens eines Aminosäuredimers,
insbesondere aus der Polykondensation:
- mindestens eines Diamins mit mindestens einer polymerisierten Fettsäure, insbesondere einem Fettsäuredimer, oder
- mindestens eines Diamindimers mit mindestens einer Dicarbonsäure
oder Mischungen davon umfasst,
wobei der Stoffmengenanteil der Nebeneinheit mehr als 1 % beträgt,
die Nebeneinheit mindestens eine der folgenden Formeln umfasst:
- entweder die Reste eines Fettsäuredimers der folgenden Formel (I): 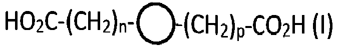
- oder die Reste eines Diamindimers der folgenden Formel (II): 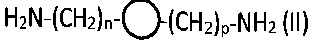
- oder die Reste eines Aminosäuredimers der folgenden Formel (III): 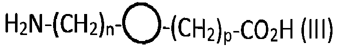
oder eine Mischung davon,
wobei in den Formeln unabhängig voneinander:
n von 1 bis 10, insbesondere von 1 bis 7, beträgt,
p von 1 bis 10, insbesondere von 1 bis 7, beträgt,
○ einer Struktur entspricht, die ausgewählt ist aus: 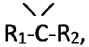 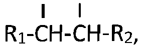 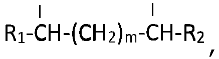 wobei m von 1 bis 5 beträgt,
wobei R₁ et R₂ unabhängig voneinander H oder eine C₁-bis C₁₂-, insbesondere eine C₇- bis C₁₁-Alkylkette darstellen,
und 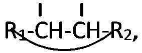
wobei R₁ und R₂ cyclisiert sind, wodurch eine Struktur:
i) mit einem Ring des Typs Cyclohexan: 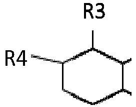 oder Phenyl: 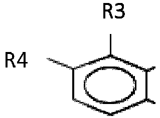
ii) mit zwei Ringen des Typs 1,2,3,4-Tetrahydronaphtalin 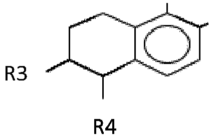
oder des Typs Bicyclo[4.4.0]decan: 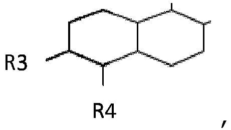
wobei R₃ und R₄ in den Strukturen mit einem oder zwei Ringen C₁- bis C₁₀-, insbesondere C₇- bis C₉-Reste, sind,
oder eine Mischung davon gebildet wird,
wobei die Gesamtzahl der Kohlenstoffatome in der Disäure der Formel (I), dem Diamin der Formel (II) und der Aminosäure der Formel (III) größer als oder gleich 30, insbesondere größer als oder gleich 36, insbesondere 36, ist,
wobei die Zusammensetzung Folgendes umfasst, bezogen auf das Gewicht:
- mindestens 70 Gew.-% eines halbkristallinen Copolyamids gemäß der obigen Definition, das gegebenenfalls 0 bis 70 Gew.-% eines anderen Polyamids umfasst,
- 2 bis 10 Gew.-% eines Polyolefins, das eine Epoxy-, Anhydrid- oder Säurefunktion umfasst, die durch Pfropfen oder durch Copolymerisation eingeführt ist,
- 3 bis 20 Gew.-%, vorteilhafterweise 5 bis 13 Gew.-%, eines Weichmachers und
- 0 bis 10 Gew.-%, insbesondere 1 bis 10 %, eines Additivs,
als Dichtungsschicht in einer Dichtungsschicht in einer Leitung, die Erdöl oder Gas enthält, wobei diese Leitung zur Erschließung von Erdöl- oder Gasvorkommen unter dem Meeresboden (offshore) verwendet wird.

2. Verwendung nach Anspruch 1, wobei die Leitung eine Schlauchleitung ist.

3. Verwendung nach einem der Ansprüche 1 bis 2, wobei das Copolyamid ein aliphatisches Copolyamid ist.

4. Verwendung nach einem der Ansprüche 1 bis 3, wobei die Viskosität in Lösung der Zusammensetzung, die gemäß der Norm ISO 307:2007 in m-Cresol bei einer Temperatur von 20 ° bestimmt wird, größer als 1, insbesondere größer als 1,2, ist.

5. Verwendung nach einem der Ansprüche 1 bis 4, wobei die gemäß der Norm ISO 11357-3:2013 bei einer Geschwindigkeit von 20 K/min mittels DSC bestimmte Tf der Zusammensetzung größer als 170 °C ist.

6. Verwendung nach einem der Ansprüche 1 bis 5, wobei mindestens eine der anderen Einheiten des Copolymers eine Einheit A ist, die ausgewählt ist aus einer Einheit, die aus einer C₆- bis C₁₂-Aminosäure, einer Einheit, die aus einem C₆- bis C₁₂-Lactam erhalten wird, und einer Einheit erhalten wird, die der Formel (aliphatisches Ca-Diamin).(aliphatische Cb-Disäure) entspricht, wobei a die Zahl der Kohlenstoffatome des Diamins darstellt und b die Zahl der Kohlenstoffatome der Disäure darstellt, wobei a und b jeweils zwischen 4 und 22 betragen.

7. Verwendung nach einem der Ansprüche 1 bis 6, wobei der Stoffmengenanteil der mindestens einen Nebeneinheit im halbkristallinen Copolyamid 1 bis 20 %, insbesondere 1 bis 10 %, besonders 2 bis 10 %, bezogen auf die Summe aller Einheiten des Copolyamids, beträgt.

8. Verwendung nach einem der Ansprüche 1 bis 7, wobei die Nebeneinheit eine X.Disäure-Einheit der Formel (I) ist, wobei X ein aliphatisches Diamin ist.

9. Verwendung nach Anspruch 8, wobei ○ 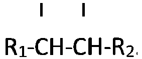 entspricht.

10. Verwendung nach Anspruch 8 oder 9, wobei die polymerisierte Fettsäure ein Fettsäuredimer in einem Anteil von mindestens 75 Gew.-%, besonders mindestens 92 Gew.-%, insbesondere mindestens 95 Gew.%, umfasst.

11. Verwendung nach einem der Ansprüche 8 bis 10, wobei die Zahl der Kohlenstoffe des Diamins X größer als 8, insbesondere gleich 10, ist.

12. Verwendung nach einem der Ansprüche 5 bis 11, wobei die Einheit A eine Einheit ist, die aus der Polykondensation eines Lactams oder einer Aminosäure erhalten wird, insbesondere aus PA11 und PA12 ausgewählt ist.

13. Verwendung nach einem der Ansprüche 5 bis 12, wobei die Einheit A eine Einheit ist, die aus der Polykondensation eines aliphatischen Ca-Diamins und einer aliphatischen Cb-Dicarbonsäure erhalten wird, wobei insbesondere die Ca- + Cb-Einheit > 15, besonders > 19.

14. Verwendung nach Anspruch 13, wobei die Einheit A ausgewählt ist aus PA614, PA618, PA1010, PA1012, PA1014, PA1018, PA1210, PA1212, PA1214, PA1218.

15. Verwendung nach einem der Ansprüche 1 bis 14, wobei die Zusammensetzung ein aus einem aliphatischen, cycloaliphatischen und aromatischen Polyamid ausgewähltes Polyamid und das mindestens eine halbkristalline Polyamid umfasst.

16. Verwendung nach Anspruch 15, wobei das Polyamid ein aliphatisches oder cycloaliphatisches Polyamid ist, das mit der Einheit A des halbkristallinen Polyamids identisch ist.

17. Verwendung nach einem der Ansprüche 1 bis 16, wobei die Zusammensetzung außerdem mindestens ein insbesondere funktionalisiertes Polyolefin umfasst.

18. Verwendung nach einem der Ansprüche 1 bis 17, wobei die Zusammensetzung außerdem mindestens einen Weichmacher umfasst.

19. Verwendung nach einem der Ansprüche 1 bis 18, wobei die Zusammensetzung außerdem mindestens ein Additiv umfasst.

20. Verwendung nach einem der Ansprüche 1 bis 19, wobei die Zusammensetzung Folgendes umfasst, bezogen auf das Gewicht:
- 70 bis 96 % des halbkristallinen Copolyamids, das gegebenenfalls 0 bis 70 Gew.-% eines anderen Polyamids umfasst,
- 0 bis 25 Gew.-%, vorteilhafterweise 0 bis 15 Gew.-%, insbesondere 2 bis 10 Gew.-%, eines Polyolefins, das eine Epoxy-, Anhydrid- oder Säurefunktion umfasst, die durch Pfropfen oder durch Copolymerisation eingeführt ist, und
- 3 bis 20 Gew.-%, vorteilhafterweise 5 bis 13 Gew.-%, eines Weichmachers,
- 0 bis 10 Gew.-%, insbesondere 1 bis 10 %, eines Additivs.

21. Leitung, insbesondere Schlauchleitung, die zur Erschließung von Erdöl- oder Gasvorkommen unter dem Meeresboden (offshore) vorgesehen ist, die mindestens eine Dichtungsschicht (1) umfasst, die aus einer Zusammensetzung gemäß der Definition in einem der Ansprüche 1 bis 20 erhalten wird.

22. Leitung nach Anspruch 21, **dadurch gekennzeichnet, dass** sie außerdem mindestens eine nicht undurchlässige zweite Schicht (2) umfasst, die aus einem oder mehreren metallischen Elementen besteht, wobei sich die zweite Schicht (2) in Kontakt mit dem transportierten Erdöl oder Gas befindet, wobei die Schicht (1) rund um die zweite Schicht (2) angeordnet ist, um die Dichtheit zu gewährleisten.

23. Leitung nach einem der Ansprüche 21 oder 22, **dadurch gekennzeichnet, dass** sie außerdem mindestens eine dritte Schicht (3) aus Metall oder einem Verbundwerkstoff umfasst, wobei die dritte Schicht (3) rund um die Schicht (1) angeordnet ist, um den Innendruck des transportierten Erdöls oder Gases auszugleichen.

24. Schlauchleitung nach einem der Ansprüche 21 bis 23, **dadurch gekennzeichnet, dass** sie außerdem mindestens eine vierte Schutzschicht (4) umfasst, die rund um die Schicht (1) oder gegebenenfalls die dritte Schicht (3) angeordnet ist.

25. Zusammensetzung, die Folgendes umfasst, bezogen auf das Gewicht:
- mindestens 70 Gew.-% eines halbkristallinen Copolyamids gemäß der Definition in Anspruch 1, das gegebenenfalls 0 bis 70 Gew.-% eines anderen Polyamids umfasst,
- 2 bis 10 Gew.-% eines Polyolefins, das eine Epoxy-, Anhydrid- oder Säurefunktion umfasst, die durch Pfropfen oder durch Copolymerisation eingeführt ist,
- 3 bis 20 Gew.-%, vorteilhafterweise 5 bis 13 Gew.-%, eines Weichmachers und
- 0 bis 10 Gew.-%, insbesondere 1 bis 10 %, eines Additivs.

26. Zusammensetzung nach Anspruch 25, wobei das andere Polyamid ein aliphatisches Polyamid, insbesondere PA11 oder PA12, ist.

27. Zusammensetzung nach Anspruch 26, wobei das Copolyamid wie in Anspruch 1 definiert ist.

28. Zusammensetzung nach einem der Ansprüche 25 bis 27, wobei das Copolyamid wie in Anspruch 8 definiert ist.

## Claims

1. Use of a composition comprising at least one polyamide, of which at least one of said polyamide is a semicrystalline copolyamide comprising at least one minor unit derived from the polycondensation:
- of at least one diamine with at least one polymerized fatty acid, in particular a fatty acid dimer, or
- of at least one diamine dimer with at least one dicarboxylic acid, or
- of at least one amino acid dimer,
in particular derived from the polycondensation:
- of at least one diamine with at least one polymerized fatty acid, in particular a fatty acid dimer, or
- of at least one diamine dimer with at least one dicarboxylic acid,
or mixtures thereof,
the mole proportion of said minor unit being greater than 1%,
said minor unit comprising at least one of the following formulae:
- either the residues of a fatty acid dimer of formula (I) below: 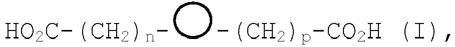
- or the residues of a diamine dimer of formula (II) below: 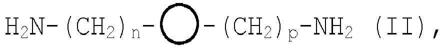
- or the residues of an amino acid dimer of formula (III) below: 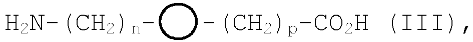
or a mixture thereof,
in which formulae, independently of each other:
n is from 1 to 10, in particular from 1 to 7,
p is from 1 to 10, in particular from 1 to 7,
○ corresponding to a structure chosen from: 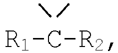 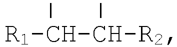 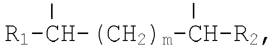 m being from 1 to 5,
in which R₁ and R₂ represent, independently of each other, H or a C₁ to C₁₂ and in particular C₇ to C₁₁ alkyl chain,
and 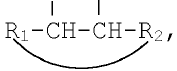
in which R₁ and R₂ are cyclized to form a structure:
i) with one ring of the type cyclohexane: 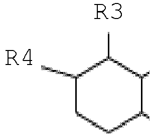 or phenyl: 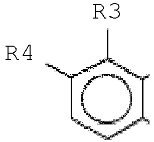
ii) with two rings of the 1,2,3,4-tetrahydronaphthalene type: 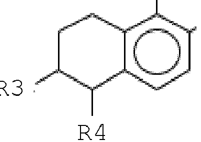
or of the bicyclo[4.4.0]decane type: 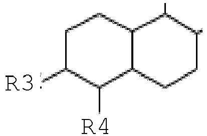
R₃ and R₄ being, in the one-ring or two-ring structures, C1 to C10 and in particular C7 to C9 alkyl residues,
or a mixture thereof,
the total number of carbon atoms in the diacid of formula (I), the diamine of formula (II) and the amino acid of formula (III) being greater than or equal to 30, in particular greater than or equal to 36, in particular 36, said composition comprising, by weight:
- at least 70% by weight of a semicrystalline copolyamide as defined above, optionally comprising from 0 to 70% by weight of another polyamide,
- from 2% to 10% by weight, of a polyolefin comprising an epoxy, anhydride or acid function, introduced by grafting or by copolymerization,
- from 3% to 20% by weight, advantageously from 5% to 13% by weight, of a plasticizer, and
- 0 to 10% by weight, in particular from 1% to 10%, of an additive,
as leaktight layer in a pipe containing oil or gas, this pipe being used in the exploitation of undersea (offshore) oil or gas deposits.

2. Use according to Claim 1, in which the pipe is a hose pipe.

3. Use according to either of Claims 1 and 2, in which the copolyamide is an aliphatic copolyamide.

4. Use according to one of Claims 1 to 3, in which the viscosity in solution of the composition, as determined according to the standard ISO 307:2007 in m-cresol at a temperature of 20°C, is greater than 1, in particular greater than 1.2.

5. Use according to one of Claims 1 to 4, in which the Tm of the composition is greater than 170°C, as determined according to the standard ISO 11357-3:2013 at a rate of 20 K/min by DSC.

6. Use according to one of Claims 1 to 5, in which at least one of the other units of said copolyamide is a unit A chosen from a unit obtained from a C₆ to C₁₂ amino acid, a unit obtained from a C₆ to C₁₂ lactam, and a unit corresponding to the formula (Ca aliphatic diamine) . (Cb aliphatic diacid), with a representing the number of carbon atoms in the diamine and b representing the number of carbon atoms in the diacid, a and b each being between 4 and 22.

7. Use according to one of Claims 1 to 6, in which the mole proportion of said at least one minor unit in the semicrystalline copolyamide is from 1% to 20%, in particular from 1% to 10%, especially from 2% to 10% relative to the sum of all the units of said copolyamide.

8. Use according to one of Claims 1 to 7, in which said minor unit is an X.diacid unit of formula (I), X being an aliphatic diamine.

9. Use according to Claim 8, in which ○ corresponds to

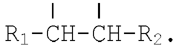

10. Use according to Claim 8 or 9, in which the polymerized fatty acid comprises a fatty acid dimer in a proportion of at least 75% by weight, especially at least 92% by weight, in particular at least 95% by weight.

11. Use according to one of Claims 8 to 10, in which the number of carbons in the diamine X is greater than 8, in particular equal to 10.

12. Use according to one of Claims 5 to 11, in which the unit A is a unit obtained from the polycondensation of a lactam or an amino acid, in particular chosen from PA11 and PA12.

13. Use according to one of Claims 5 to 12, in which the unit A is a unit obtained from the polycondensation of a Ca aliphatic diamine and a Cb aliphatic dicarboxylic acid, in particular the unit Ca + Cb > 15, especially > 19.

14. Use according to Claim 13, in which the unit A is chosen from PA614, PA618, PA1010, PA1012, PA1014, PA1018, PA1210, PA1212, PA1214 and PA1218.

15. Use according to one of Claims 1 to 14, in which the composition comprises a polyamide chosen from an aliphatic, cycloaliphatic or aromatic polyamide, and said at least one semicrystalline polyamide.

16. Use according to Claim 15, in which said polyamide is an aliphatic or cycloaliphatic polyamide that is identical to the unit A of said semicrystalline polyamide.

17. Use according to one of Claims 1 to 16, in which the composition also comprises at least one polyolefin, in particular a functionalized polyolefin.

18. Use according to one of Claims 1 to 17, in which the composition also comprises at least one plasticizer.

19. Use according to one of Claims 1 to 18, in which the composition also comprises at least one additive.

20. Use according to one of Claims 1 to 19, in which the composition comprises, by weight:
- 70% to 96% of said semicrystalline copolyamide optionally comprising from 0 to 70% by weight of another polyamide,
- 0 to 25% by weight, advantageously from 0 to 15%, in particular from 2% to 10% by weight, of a polyolefin comprising an epoxy, anhydride or acid function, introduced by grafting or by copolymerization, and
- 3% to 20% by weight, advantageously from 5% to 13% by weight, of a plasticizer,
- 0 to 10% by weight, in particular from 1% to 10%, of an additive.

21. Pipe, in particular a hose pipe, intended to be used in the exploitation of undersea (offshore) oil or gas deposits, comprising at least one leaktight layer (1) obtained from a composition as defined according to one of Claims 1 to 20.

22. Pipe according to Claim 21, **characterized in that** it also comprises at least one second layer (2), which is not leaktight, consisting of one or more metal elements, the second layer (2) being in contact with the oil or gas conveyed, the layer (1) being placed around the second layer (2) so as to ensure the leaktightness.

23. Pipe according to either one Claims 21 or 22, **characterized in that** it also comprises at least one third layer (3) of metal or a composite material, the third layer (3) being placed around the layer (1) so as to compensate for the internal pressure of the oil or gas conveyed.

24. Hose pipe according to any one of Claims 21 to 23, **characterized in that** it also comprises at least one fourth protective layer (4) placed around the layer (1) or, where appropriate, the third layer (3).

25. Composition comprising, by weight:
- at least 70% by weight of a semicrystalline copolyamide as defined in Claim 1, optionally comprising from 0 to 70% by weight of another polyamide,
- from 2% to 10% by weight of a polyolefin comprising an epoxy, anhydride or acid function, introduced by grafting or by copolymerization,
- from 3% to 20% by weight, advantageously from 5% to 13% by weight, of a plasticizer, and
- from 0 to 10% by weight, in particular from 1% to 10%, of an additive.

26. Composition according to Claim 25, in which said other polyamide is an aliphatic polyamide, in particular PA11 or PA12.

27. Composition according to Claim 26, in which said copolyamide is as defined in Claim 1.

28. Composition according to one of Claims 25 to 27, in which said copolyamide is as defined in Claim 8.
